# EUROPÄISCHE PATENTANMELDUNG

(11) **EP 3 789 784 A1**
(43) Veröffentlichungstag der Anmeldung: **10.03.2021**
(21) Anmeldenummer: 20193569.9
(22) Anmeldetag: 31.08.2020
(51) Int. Cl.: G01S 5/14, G01S 13/87, H04W 4/80, H04W 4/029

(54) **ANORDNUNG ZUM ORTEN EINES GEGENSTANDES IN EINEM GEBÄUDE**

(30) Priorität: 09.09.2019 DE 102019006328
(71) Anmelder: Drägerwerk AG & Co. KGaA, 23558 Lübeck (DE)
(72) Erfinder: Eilers, Jan-Gerd, 23558 Lübeck (DE); Düvel, Ingo, 23558 Lübeck (DE); Baltin, Peter, 23558 Lübeck (DE)

(57) **Zusammenfassung**

Die Erfindung betrifft eine Anordnung zum Orten eines Gegenstands in einem Gebäude. Die Anordnung umfasst mehrere ortsfeste Empfangs-Einheiten, die sich an einer Wand (WE) montieren lassen, einen Abstrahler an einem zu ortenden Gegenstand sowie ein Steuergerät. Jede Empfangs-Einheit umfasst in einer Alternative jeweils eine Koppeleinheit (Auf, Hb), insbesondere eine Steckdose, oder eine Betätigungseinheit. In einer anderen Alternative lässt jede Empfangs-Einheit sich mit dem Hinterbau (Hb) einer solchen Koppeleinheit oder Betätigungseinheit mechanisch verbinden. Jeder Abstrahler strahlt Funkwellen ab. Eine Ortungs-Antenne (7) der Empfangs-Einheit empfängt diese Funkwellen und übermittelt Ortungs-Signale an ein zentrales Steuergerät. Dieses zentrale Steuergerät ortet abhängig von empfangenden Ortungs-Signalen einen Abstrahler.

## Beschreibung

Die Erfindung betrifft eine Anordnung, welche einen Gegenstand in einem Gebäude, insbesondere in einem Krankenhaus, und / oder an Bord eines Fahrzeugs zu orten vermag, sowie eine Empfangs-Einheit einer solchen Anordnung.

In einem Gebäude, beispielsweise in einem Krankenhaus, oder an Bord eines Fahrzeugs werden häufig ein Gegenstand, beispielsweise ein bestimmtes medizinisches Gerät oder ein bestimmter Ausrüstungsgegenstand, oder eine Person, beispielsweise ein bestimmter Patient oder Arzt oder Pfleger oder ein bestimmtes Besatzungsmitglied, gesucht. Falls die Zeit zur Suche nach einem Gerät oder einer Person reduziert werden kann, steht dem Personal mehr Zeit für andere Aufgaben zur Verfügung, beispielsweise für die Pflege von Patienten. In einem Gebäude oder Fahrzeug lässt sich ein Geopositions-Empfänger häufig nicht mit ausreichender Zuverlässigkeit verwenden, weil das Gebäude bzw. Fahrzeug eine relativ hohe Abschirmung nach außen bewirkt. Akustische Ausgaben, um einen Gegenstand oder eine Person zu suchen, sind oft unerwünscht.

Verschiedene Anordnungen sind bekannt geworden, um in einem Gebäude eine Person und / oder einen Gegenstand zu lokalisieren und dadurch zu orten. Sony Mobile hat unter der Bezeichnung Visilion Care einen kompletten Ortungsdienst innerhalb eines Gebäudes (Indoor-Ortungsdienst) vorgestellt, welcher unter https://www.sonymobile.com/de/iot-solutions/visilion-care/, sowie unter https://www.draeger.com/de de/Hospital/Services/Ortungsdienst, beide abgefragt am 09.07.2019, beschrieben wird. Diese Anordnung umfasst jeweils einen tag, auch tracker genannt, pro zu ortendem Gerät, mehrere observers und eine Software-Anwendung, die auf einem Browser abläuft. Die observers erhalten mittels Bluetooth Low Energy (BLE) Signale von dem tracker und erzeugen Positionssignale, welche sie per Wi-Fi weiterleiten. Jeder observer lässt sich in eine konventionelle Steckdose einstecken.

Crownstone bietet eine Lösung an, um ein Mobiltelefon und damit eine Person mit diesem Mobiltelefon in einem Gebäude zu orten. Diese Lösung wird unter https://crownstone.rocks//, abgefragt am 09.07.2019, beschrieben. Mehrere Einheiten dieser Lösung lassen sich in einer Variante in eine Steckdose einstecken und sind in einer Variante als Unterputz-Variante verfügbar. Bei der Unterputz-Variante wird ein Bauteil hinter einer Steckdose in einer Unterputz-Dose angeordnet. Die Einheiten orten zusammen das Mobiltelefon.

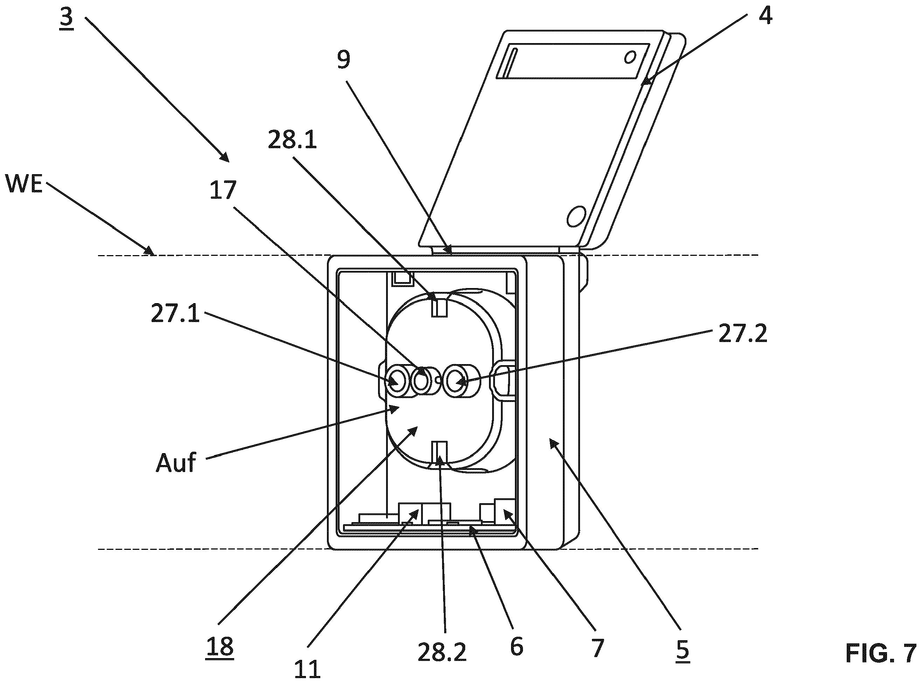

US 7323991 B1 zeigt ein System, um Personen und Gegenstände in einem Gebäude (facility) zu lokalisieren, ihre Bewegung zu verfolgen und Daten auszutauschen. An mehreren Positionen in dem Gebäude sind ortsfeste relays 120 sowie access points 130 montiert. Bei einer Person oder einem Gerät kann mindestens ein transceiver, bezeichnet als tag 110, montiert sein. Diese tags 110 können Daten mit einem relay 120 und einem access point 130 austauschen, vorausgesetzt die Entfernung ist nicht zu groß. Ein relay 120 kann zusätzlich eine Steckdose bereitstellen, vgl. Fig. 7.

In US 20180324744 A1 wird ein System beschrieben, um ein Objekt in einem Bereich zu lokalisieren. An einem zu ortenden Gegenstand 160 ist ein Kommunikationsgerät 190, auch beacon genannt, montiert, welches location signals 195 abzustrahlen vermag. Eine Empfangs-Einheit (electrical device 102) umfasst ein Gehäuse 103, in dessen Inneren ein Steuergerät 104 mit einem Kommunikationsmodul 108, eine Spannungsversorgung 104 und mehrere Antennen 175-1 bis 175-N angeordnet sind. Eine Empfangs-Einheit 102 kann einen Beleuchtungskörper (light fixture) oder einen Lichtschalter oder auch einen Sensor bereitstellen.

US 20150256355 A1 zeigt eine Anordnung für die Gebäudeautomatisierung, welche eine Vielzahl von nodes or wireless access points umfasst, welche an jeweils eine Wand montiert sind. Jeder node kann an einen digital hub Daten übermitteln, beispielsweise drahtlos mit Bluetooth. In einer Ausgestaltung stellt ein node eine Steckdose bereit, in einer anderen Ausgestaltung einen Lichtschalter.

Der Erfindung liegt die Aufgabe zugrunde, eine Anordnung zum Orten mindestens eines Gegenstands in einem Gebäude, insbesondere in einem Krankenhaus, oder an Bord eines Fahrzeugs sowie eine Empfangs-Einheit einer solchen Anordnung bereitzustellen, wobei die Anordnung und die Empfangs-Einheit sich leichter als bekannte Ortungs-Anordnungen und Empfangs-Einheiten in eine in diesem Gebäude oder Fahrzeug bereits bestehende Infrastruktur ergänzen lassen.

Die Erfindung wird durch eine Anordnung mit den Merkmalen des Anspruchs 1 sowie durch eine Empfangs-Einheit mit den Merkmalen des Anspruchs 14 gelöst.

Vorteilhafte Ausgestaltungen sind in den Unteransprüchen angegeben. Vorteilhafte Ausgestaltungen der erfindungsgemäßen Anordnung, die sich auf eine Empfangs-Einheit beziehen, sind auch vorteilhafte Ausgestaltungen der erfindungsgemäßen Empfangs-Einheit und umgekehrt.

Die erfindungsgemäße Anordnung ist dazu ausgestaltet, einen Gegenstand in einem Gebäude oder an Bord eines Fahrzeugs zu orten. Das Gebäude ist insbesondere ein Krankenhaus.

Unter "Orten" wird der Vorgang verstanden, automatisch die aktuelle Position eines gesuchten Gegenstands in dem Gebäude oder Fahrzeug zu ermitteln, bevorzugt in einem vorgegebenen Referenz-Koordinatensystem. Mindestens soll bei der Ortung ein Raum oder sonstiger Bereich des Gebäudes oder Fahrzeugs ermittelt werden, in dem sich der Gegenstand aktuell befindet.

Die erfindungsgemäße Anordnung umfasst
- mehrere ortsfeste Empfangs-Einheiten,
- mindestens einen Abstrahler und
- ein signalverarbeitendes Steuergerät.

Der oder jeder Abstrahler der Anordnung lässt sich mit jeweils einem zu ortenden Gegenstand verbinden oder ist mit einem solchen Gegenstand verbunden.

Jede Empfangs-Einheit der Anordnung umfasst jeweils ein Gehäuse und eine Ortungs-Antenne. Die Ortungs-Antenne ist vom Gehäuse umgeben oder wird vom Gehäuse aufgenommen.

Jede Empfangs-Einheit der Anordnung ist an jeweils einer Wand montiert oder lässt sich an einer Wand montieren.

Jede Empfangs-Einheit der Anordnung hat jeweils eine der folgenden beiden alternativen Eigenschaften:
- Die Empfangs-Einheit umfasst eine Koppeleinheit oder eine Betätigungseinheit.
- Oder die Empfangseinheit ist mit einem Hinterbau einer solchen Koppeleinheit oder einer solchen Betätigungseinheit mechanisch verbunden oder lässt sich mit einem solchen Hinterbau mechanisch verbinden. Der Hinterbau und die mit dem Hinterbau verbundene Empfangs-Einheit stellen zusammen eine Koppeleinheit oder eine Betätigungseinheit bereit.

Die Koppeleinheit lässt sich lösbar mit einer korrespondierenden Gegen-Koppeleinheit eines elektrischen Verbrauchers oder eines datenverarbeitenden Geräts verbinden. Die Koppeleinheit ist insbesondere eine Steckdose oder eine Datendose. Die Betätigungseinheit ermöglicht es, einen elektrischen Verbraucher zu betätigen, insbesondere einzuschalten und auszuschalten.
Der oder jeder Abstrahler der Anordnung vermag Abstrahler-Funkwellen abzustrahlen.
Jede Empfangs-Einheit vermag Ortungs-Signale zu erzeugen. Diese Ortungs-Signale korrelieren mit dem Vorhandensein / Nichtvorhandensein oder mit mindestens einer Charakteristik von Abstrahler-Funkwellen, welche auf die Ortungs-Antenne dieser Empfangs-Einheit auftreffen. Eine Charakteristik von Abstrahler-Funkwellen ist insbesondere die Signalstärke oder die Signalrichtung dieser Abstrahler-Funkwellen. Jede Empfangs-Einheit vermag weiterhin die von ihr erzeugten Ortungs-Signale an das Steuergerät zu übermitteln.

Das Steuergerät vermag eine Information über die Position des Abstrahlers oder jeweils eine Information über die jeweilige Position jedes Abstrahlers zu ermitteln. Für diese Positionsermittlung vermag das Steuergerät Ortungs-Signale zu verwenden, welche das Steuergerät von mindestens einer Empfangs-Einheit der Anordnung empfangen hat.

Die Erfindung betrifft weiterhin eine Empfangs-Einheit, welche dazu ausgestaltet ist, ein Bestandteil einer Anordnung zum Orten eines Gegenstands zu sein. Diese erfindungsgemäße Empfangs-Einheit umfasst die Teile einer erfindungsgemäßen Empfangs-Einheit der Anordnung und erzielt die entsprechenden Vorteile.

Erfindungsgemäß umfasst die Anordnung mehrere Empfangs-Einheiten und mindestens einen Abstrahler. Der oder jeder Abstrahler lässt sich dauerhaft oder lösbar an einem zu ortenden Gegenstand befestigen. Solange eine Person diesen Gegenstand mit dem Abstrahler mit sich trägt, lässt sich diese Person orten, indem der getragene Gegenstand geortet wird.

Ausreichend ist es, einen zu ortenden Gegenstand mit einem Abstrahler zu versehen. Der Gegenstand braucht - abgesehen von der Montage oder dem Anbringen eines Abstrahlers - nicht verändert zu werden. Dieser Abstrahler kann einfach und klein aufgebaut sein und beeinträchtigt das Funktionieren des Gegenstands in der Regel praktisch nicht.

Die Anordnung umfasst erfindungsgemäß mehrere Empfangs-Einheiten, die sich mit ausreichenden Abständen voneinander positionieren lassen, sowie ein Steuergerät. Daher lässt sich in vielen Fällen die aktuelle Position des oder eines Abstrahlers der Anordnung mit ausreichender Zuverlässigkeit ermitteln, insbesondere aus den folgenden Gründen:
Auch bei einer relativ geringen Reichweite der Abstrahler-Funkwellen und somit bei einem relativ geringen maximal möglichen Abstand zwischen einem Abstrahler und einer Empfangs-Einheit empfängt häufig wenigstens eine Empfangs-Einheit Abstrahler-Funkwellen von dem oder einem Abstrahler. Dank der relativ geringen Reichweite muss der Abstrahler sich in einem relativ kleinen Umkreis um diese empfangende Empfangs-Einheit befinden, was die Ortung dieses Abstrahlers erleichtert. Bei einer relativ großen Reichweite empfangen häufig mehrere verschiedene Empfangs-Einheiten der Anordnung Abstrahler-Funkwellen von demselben Abstrahler. Möglich ist oft, aus Ortungs-Signale von mehreren Empfangs-Einheiten, die denselben Abstrahler betreffen, die gesuchte Position des Gegenstands zu ermitteln.

Erfindungsgemäß lässt sich jede Empfangs-Einheit an einer Wand montieren. Diese Wand kann eine vertikale oder horizontale oder schräge Wand eines Raums in einem Gebäude oder Fahrzeug sein. Die Wand hält die montierte Empfangs-Einheit in einer definierten Position, die sich im Betrieb nicht ändert, wobei das Steuergerät die Position der Empfangs-Einheit verwenden kann, um den Abstrahler zu orten.

Weil jede Empfangs-Einheit an einer Wand montiert ist und nicht z.B. in eine vorhandene Steckdose eingesteckt ist, wird die Gefahr ausgeschlossen, dass eine Empfangs-Einheit aus der Steckdose gezogen wird, beispielsweise um einen Stecker eines elektrischen Verbrauchers oder eines datenverarbeitenden Geräts in die Steckdose zu stecken, um Platz zu schaffen oder um die Steckdose zu reinigen. In vielen Fällen könnte die Empfangs-Einheit dann keine Ortungs-Signale mehr erzeugen. Weil jede Empfangs-Einheit erfindungsgemäß an einer Wand montiert ist und sich nicht aus einer Steckdose ziehen und dadurch deaktivieren lässt, wird auch die Gefahr verringert, dass ein Gegenstand deshalb nicht geortet werden kann, weil überhaupt keine Empfangs-Einheit in der Reichweite des mit diesem Gegenstand verbundenen Abstrahlers Abstrahler-Funkwellen empfangen und Ortungs-Signale erzeugen und übermitteln kann.
Eine Empfangs-Einheit, die in eine Steckdose eingesteckt wird, kann außerdem ihre Position relativ zur Steckdose während eines Einsatzes verändern, beispielsweise aufgrund eines ungewollten mechanischen Impulses von außen oder weil die Empfangs-Einheit eine eigene Spannungsversorgung umfasst und auch dann Ortungs-Signale erzeugen kann, wenn sie aus der Steckdose gezogen ist. Diese Veränderung kann zu Fehlern bei der Ortung führen. Die Erfindung schließt diese Gefahr aus.

Weil jede Empfangs-Einheit an einer Wand und somit an einer konstanten Position in Gebäude oder Fahrzeug montiert ist, vermag das Steuergerät die Laufzeit der Abstrahler-Funkwellen vom Abstrahler zu einer Empfangs-Einheit und / oder die Signalstärke zuverlässig auszuwerten. Wäre die Position der Empfangs-Einheit veränderlich, so wäre dies mit einer nur geringeren Zuverlässigkeit möglich.

In vielen Fällen vermag das Steuergerät unterschiedliche Richtungen von demselben Abstrahler zu verschiedenen Empfangs-Einheiten der Anordnung und / oder Laufzeit-Unterschiede und / oder unterschiedliche Signalstärken zu detektieren und auszuwerten, um beispielsweise per Triangulation oder Funkzellen-Identifizierung diesen Abstrahler zu orten. Bekannte Ortungs-Verfahren lassen sich verwenden. Diese Ortung ist in vielen Fällen genauer, als wenn nur eine einzige Empfangs-Einheit Abstrahler-Funkwellen von einem Abstrahler empfangen würde.
Zwar ist erfindungsgemäß jede Empfangs-Einheit an einer Wand montiert und nicht in eine Steckdose eingesteckt. In vielen Fällen ist es aber mit vertretbarem Aufwand möglich, eine Empfangs-Einheit bei Bedarf wieder zu demontieren und an einer anderen Stelle anzubringen.

Erfindungsgemäß übermittelt jede Empfangs-Einheit Ortungs-Signale an das räumlich entfernte Steuergerät. Das Steuergerät wertet die empfangenen Ortungs-Signale aus. Dadurch ist es nicht erforderlich, dass eine Empfangs-Einheit oder gar ein Abstrahler eine lokale Signalverarbeitungseinheit umfasst, um die Ortungs-Signale auszuwerten. Häufig steht in einer Empfangs-Einheit nicht ausreichend Platz für eine solche Signalverarbeitungseinheit zur Verfügung, in einem Abstrahler auch nicht. Außerdem muss die Wärme, die eine Signalverarbeitungseinheit erzeugt, abgeführt werden, was bei einer Empfangs-Einheit oft deutlich schwieriger als bei einem Steuergerät ist. Dank des räumlich entfernten zentralen Steuergeräts ist es außerdem nicht erforderlich, dass eine Empfangs-Einheit Signale an eine andere Empfangs-Einheit übermittelt.

In einer ersten Alternative der Erfindung umfasst jede Empfangs-Einheit jeweils eine Koppeleinheit oder eine Betätigungseinheit. In einer zweiten Alternative lässt sich jede Empfangs-Einheit mit jeweils einem Hinterbau einer Koppeleinheit oder Betätigungseinheit mechanisch verbinden. Die beiden Alternativen lassen sich kombinieren, beispielsweise indem mindestens eine Empfangs-Einheit der Anordnung eine Koppeleinheit oder Betätigungseinheit bereitstellt und mindestens eine weitere Empfangs-Einheit der Anordnung sich mit einem Hinterbau einer Koppeleinheit oder Betätigungseinheit mechanisch verbinden lässt.

In beiden Alternativen stellt jede Empfangs-Einheit jeweils eine Koppeleinheit oder eine Betätigungseinheit bereit. Die bereitgestellte Koppeleinheit, beispielsweise eine Steckdose, vermag in einer Ausgestaltung eine Gegen-Koppeleinheit eines elektrischen Verbrauchers, beispielsweise einen elektrischen Stecker eines medizinischen Geräts oder einer Lichtquelle oder eines Stellantriebs, aufzunehmen und dadurch insbesondere den elektrischen Verbraucher mit einem stationären Spannungsversorgungsnetz zu verbinden. In einer anderen Ausgestaltung vermag die Koppeleinheit eine Gegen-Koppeleinheit, z.B. einen Datenstecker, eines datenverarbeitenden Geräts aufzunehmen und dadurch ein datenverarbeitendes Gerät mit einem stationären Datenkommunikationsnetz, z.B. einem LAN oder einem Telefonnetz, zu verbinden.

Weil jede Empfangs-Einheit jeweils eine Koppeleinheit oder eine Betätigungseinheit bereitstellt, verringert die erfindungsgemäße Anordnung nicht die Anzahl der in dem Gebäude oder Fahrzeug verfügbaren Koppeleinheiten und Betätigungseinheiten. Würde hingegen eine Empfangs-Einheit in eine Steckdose eingesteckt, so ist diese Steckdose belegt und daher nicht mehr verfügbar.

Die Erfindung ermöglicht es, jeweils eine bereits vorhandene Koppeleinheit und / oder Betätigungseinheit durch eine erfindungsgemäße Empfangs-Einheit zu ersetzen, ohne dass dadurch eine Koppeleinheit oder Betätigungseinheit weniger zur Verfügung steht. Dank des Merkmals, dass jede Empfangs-Einheit jeweils eine Koppeleinheit oder Betätigungseinheit bereitstellt, führt die erfindungsgemäße Anordnung zu einer höheren Flexibilität innerhalb des Gebäudes oder Fahrzeugs verglichen mit einer Anordnung, bei der eine Empfangs-Einheit in eine Steckdose gesteckt wird und diese Steckdose nicht für einen anderen elektrischen Verbraucher oder ein anderes datenverarbeitendes Gerät zur Verfügung steht oder bei der eine Empfangs-Einheit eine vorhandene Betätigungseinheit ersetzt.

Gesehen in die Betrachtungsrichtung auf eine Wand hat eine konventionelle Koppeleinheit oder Betätigungseinheit eine zum Betrachter hin zeigende Vorderfläche, typischerweise von einer Fronteinheit bereitgestellt, sowie einen vom Betrachter weg zeigenden Hinterbau. Dieser Hinterbau ist mit elektrischen Leitungen oder Datenleitungen in der Wand elektrisch verbunden oder verbindbar. Im Falle einer Steckdose als der Koppeleinheit stellt der Hinterbau weiterhin mindestens eine Aufnahmeeinheit bereit, in welche sich mindestens ein korrespondierender Stift eines Steckers stecken lässt. Im Falle einer elektrischen Steckdose stellt der Hinterbau in der Regel zwei oder drei Aufnahmeeinheiten bereit, in welche sich zwei oder drei korrespondierende Stifte eines Steckers stecken lassen. Dieser Hinterbau wird bei einer Steckdose auch als Steckdosen-Einsatz bezeichnet.

In einer ersten Alternative der Erfindung umfasst jede Empfangs-Einheit jeweils eine Koppeleinheit oder Betätigungseinheit und insbesondere jeweils einen Hinterbau einer Koppeleinheit oder Betätigungseinheit. Dieser Hinterbau umfasst mindestens eine Aufnahmeeinheit, im Falle eines Steckdosen-Einsatzes in der Regel zwei oder drei Aufnahmeeinheiten für einen elektrischen Stecker, und lässt sich genau wie der Hinterbau einer konventionellen Koppeleinheit oder Betätigungseinheit mit elektrischen Leitungen oder Datenleitungen in der Wand verbinden. Der Hinterbau und somit die gesamte Empfangs-Einheit lassen sich genauso wie eine konventionelle Koppeleinheit oder Betätigungseinheit mit den elektrischen Leitungen oder Datenleitungen verbinden und in eine entsprechende Aussparung in der Wand montieren, z.B. in einer Unterputz-Dose.

In einer zweiten Alternative der Erfindung lässt sich jede Empfangs-Einheit mit jeweils einem Hinterbau einer konventionellen Koppeleinheit oder Verbindungseinheit mechanisch und optional elektrisch verbinden. Nachdem diese mechanische Verbindung und optional diese elektrische Verbindung hergestellt ist, stellen die Empfangs-Einheit und der konventionelle Hinterbau zusammen die Koppeleinheit oder Betätigungseinheit bereit. Eine Empfangs-Einheit gemäß der zweiten Alternative braucht keinen Hinterbau zu umfassen.
Eine Empfangs-Einheit gemäß der zweiten Alternative lässt sich leicht anstelle einer konventionellen Koppeleinheit oder Betätigungseinheit an einer Wand montieren. Ausreichend ist es, die - gesehen in eine Betrachtungsrichtung auf die Wand - vor dem Hinterbau befindlichen Bestandteile der konventionellen Koppeleinheit oder Verbindungseinheit, insbesondere eine Fronteinheit, zu entfernen, wobei der Hinterbau in der Wand verbleibt und mit den elektrischen Leitungen oder Datenverbindungen verbunden bleibt. Die erfindungsgemäße Empfangs-Einheit wird auf den in der Wand verbleibenden Hinterbau aufgesetzt und mechanisch mit diesem verbunden. Im einfachsten Falle reicht es, eine einzige Schraube zur mechanischen Verbindung und Positionierung in den Hinterbau zu schrauben. Nicht erforderlich ist es, die elektrischen Leitungen oder Datenleitungen vom Hinterbau zu lösen und mit der Empfangs-Einheit zu verbinden. Diese Alternative ermöglicht es, die Empfangs-Einheit besonders rasch anstelle einer konventionellen Koppeleinheit oder Betätigungseinheit zu montieren.

Diese beiden erfindungsgemäßen Alternativen lassen sich kombinieren. Mindestens eine Empfangs-Einheit der Anordnung stellt bei dieser Kombination einen Hinterbau bereit, und mindestens eine weitere Empfangs-Einheit der Anordnung lässt sich mit einem konventionellen Hinterbau verbinden. Diese beiden Alternativen der Erfindung führen dazu, dass die Erfindung mit relativ geringem Aufwand ermöglicht, ein Gebäude oder Fahrzeug mit vorhandener Infrastruktur und insbesondere mit Koppeleinheiten und / oder Betätigungseinheiten nachträglich mit der erfindungsgemäßen Anordnung auszustatten und dadurch die erfindungsgemäße Anordnung in die bereits vorhandene Infrastruktur des Gebäudes oder Fahrzeugs zu integrieren. Die bereits vorhandene Infrastruktur vermag zusätzlich einen Gegenstand zu orten. Zur Montage einer erfindungsgemäßen Empfangs-Einheit reicht es in vielen Fällen aus, eine an der Wand montierte konventionelle Koppeleinheit oder Betätigungseinheit, z.B. eine Steckdose oder einen Schalter, abzuschrauben und
- bei der ersten Alternative die Empfangs-Einheit anstelle dieser Koppeleinheit oder Betätigungseinheit mit den elektrischen Leitungen oder Datenleitungen zu verbinden und
- bei der zweiten Alternative die Empfangs-Einheit mit dem in der Wand verbleibenden Hinterbau mechanisch zu verbinden.

Bei beiden Alternativen ist es nicht erforderlich, hinter der Wand-Ebene zusätzlichen Platz zu schaffen, beispielsweise indem Putz oder sonstiges WandMaterial aus der Wand entfernt wird. Dadurch kann ein Elektriker mit üblichem Werkzeug jede Empfangs-Einheit rasch montieren. Die Gefahr ist sehr gering, dass bei der Montage einer Empfangs-Einheit eine in der Wand befindliche elektrische Leitung oder sonstige Leitung beschädigt wird. Die Montage einer Empfangs-Einheit verursacht außerdem in der Regel keinen Staub und keinen Lärm. Die Einbautiefe der Empfangs-Einheit ist geringer, als wenn der hintere Teil eine größere Abmessung senkrecht zur Wand-Ebene aufweisen würde als eine konventionelle Koppeleinheit oder Betätigungseinheit. Dadurch lässt sich die Empfangs-Einheit auch an einer relativ dünnen Wand montieren, ohne eine Leitung in der Wand zu beschädigen oder gar die Wand ungewollt zu durchbrechen.

Eine erfindungsgemäße Empfangs-Einheit stellt einen Hinterbau einer Koppeleinheit oder Betätigungseinheit bereit oder lässt sich mit einem solchen Hinterbau mechanisch verbinden. Dadurch ist es möglich, aber dank der Erfindung nicht erforderlich, elektronische Komponenten und Kommunikationseinheiten, beispielsweise Antennen, hinter einer zum Raum hin zeigenden vorderen Wand-Ebene zu positionieren. Vielmehr wird ermöglicht, sie vor der Wand-Ebene anzuordnen. Die Wand schirmt insbesondere die Antennen der erfindungsgemäßen Empfangs-Einheit weniger oder sogar gar nicht ab.

Weil Komponenten vor der Wand positioniert sind, wird derjenige Teil einer erfindungsgemäßen Empfangs-Einheit, der sich vor der Wand-Ebene befindet und in den Raum hineinragt, in der Regel eine größere Abmessung senkrecht zur Wand-Ebene aufweisen als eine konventionelle Koppeleinheit oder Betätigungseinheit. Diese Wirkung erleichtert es, Meldeelemente, insbesondere Meldeleuchten oder akustische Meldeelemente, und / oder Betätigungselemente, insbesondere Taster oder Schalter, an der Empfangs-Einheit anzubringen. Möglich, aber dank dieses Merkmals in vielen Fällen nicht erforderlich ist es, dass ein Benutzer die Empfangs-Einheit drahtlos überwacht oder betätigt.

Erfindungsgemäß umfasst jede Empfangs-Einheit jeweils ein Gehäuse. Dieses Gehäuse umgibt bevorzugt vollständig die übrigen Teile der Empfangs-Einheit - bis auf Aussparungen, die in das Gehäuse eingelassen sind und zu der bereitgestellten Koppeleinheit gehören. Dieses Gehäuse schützt die übrigen Teile vor mechanischen und chemischen Einflüssen sowie vor Feuchtigkeit. Dank dieses Gehäuses lässt die Empfangs-Einheit sich als ein einziges Teil an der Wand montieren. Nicht erforderlich ist es, nacheinander mehrere Teile in eine Aussparung in der Wand einzufügen und / oder mehrere Teile der Empfangs-Einheit miteinander zu verbinden. Dieses Merkmal mit dem Gehäuse erleichtert die Montage der Empfangs-Einheit an der Wand und spart insbesondere Zeit ein und verringert die Gefahr eines Fehlers bei der Montage. Ein solcher Fehler kann insbesondere dann auftreten, wenn vergessen wird, ein Teil zu montieren, oder ein Teil an einer falschen Stelle oder in einer falschen Position eingebaut oder falsch verbunden wird. Die Montage eines einzigen vorab zusammengesetzten Teils ist in vielen Fällen ergonomischer als ein Zusammenbau vor Ort aus mehreren Teilen.

Erfindungsgemäß stellt jede Empfangs-Einheit einen Hinterbau einer Koppeleinheit oder Betätigungseinheit bereit oder lässt sich mit einem solchen bereits montierten Hinterbau verbinden. Dadurch wird ermöglicht, die Empfangs-Einheit anstelle einer konventionellen Koppeleinheit oder Betätigungseinheit zu montieren und eine bereits vorhandene Stromversorgung oder Datenverbindung weiter zu nutzen, nämlich zusätzlich für die Empfangs-Einheit. In vielen Fällen ist es daher möglich, aber dank der Erfindung nicht erforderlich, eine eigene Spannungsversorgungseinheit für die Empfangs-Einheit vorzusehen.

Erfindungsgemäß vermag jede Empfangs-Einheit Ortungs-Signale zu erzeugen. Die Empfangs-Einheit erzeugt die Ortungs-Signale so, dass diese mit dem Vorhandensein / Nichtvorhandensein oder mit mindestens einer Charakteristik von Abstrahler-Funkwellen korrelieren, wobei diese Abstrahler-Funkwellen auf die Ortungs-Antenne der Empfangs-Einheit auftreffen. Die Ortungs-Signale enthalten also mindestens die Information, ob überhaupt oder wann Abstrahler-Funkwellen auf die Ortungs-Antenne auftreffen oder nicht. Die oder eine Charakteristik von auftreffenden Abstrahler-Funkwellen ist bevorzugt die Signalstärke und / oder die Signalrichtung der auftreffenden Abstrahler-Funkwellen. Falls die Empfangs-Einheit Funkwellen ausstrahlt und der oder ein Abstrahler diese reflektiert, so kann auch die Signallaufzeit eine detektierte Charakteristik sein. Diese Charakteristik korreliert mit der Entfernung zwischen der Empfangs-Einheit und dem Abstrahler und / oder mit der Richtung, aus der die Abstrahler-Funkwellen auf die Empfangs-Einheit auftreffen.

Erfindungsgemäß vermag das Steuergerät eine Information über die jeweilige Position des oder jedes Abstrahlers zu ermitteln. Natürlich ist es möglich, dass das Steuergerät tatsächlich mindestens zeitweise nicht jeden Abstrahler orten kann. Im einfachsten Fall umfasst diese Information eine Kennzeichnung oder sonstige Festlegung eines Bereichs in dem Gebäude oder Fahrzeug, in dem sich der Abstrahler befindet, beispielsweise eine Kennzeichnung eines Raums - oder die Information, dass der Abstrahler aktuell nicht gefunden wurde, weil keine Empfangs-Einheit der Anordnung Abstrahler-Funkwellen von diesem Abstrahler empfangen hat. Möglich ist auch, dass diese erzeugte Information zusätzlich die Position des Abstrahlers in dem detektierten Bereich, beispielsweise in dem Raum, festlegt - oder die Position in einem Referenz-Koordinatensystem.

In einer Ausgestaltung hängt die Positions-Information davon ab, von wie vielen Empfangs-Einheiten das Steuergerät Ortungs-Signale empfängt, die sich auf denselben Abstrahler beziehen. Falls das Steuergerät nur von einer einzigen Empfangs-Einheit Ortungs-Signale empfängt, die sich auf einen bestimmten Abstrahler beziehen, so vermag das Steuergerät in vielen Fällen die Information zu ermitteln, dass der Abstrahler sich in demselben Raum wie diese Empfangs-Einheit befindet. Falls das Steuergerät von zwei Empfangs-Einheiten, die sich in zwei verschiedenen Räumen befinden, jeweils Ortungs-Signale empfängt, die sich auf denselben Abstrahler beziehen, so entscheidet in einer Ausgestaltung das Steuergerät, welche Empfangs-Einheit Ortungs-Signale übermittelt hat, die eine größere Signalstärke der auftreffenden Abstrahler-Funkwellen kennzeichnen. Denn eine Wand schirmt Abstrahler-Funkwellen ab oder dämpft sie und reduziert daher die Signalstärke. Falls das Steuergerät von mindestens zwei, bevorzugt von mindestens drei Empfangs-Einheiten, die sich in demselben Raum befinden, jeweils Ortungs-Signale empfängt, die sich auf denselben Abstrahler beziehen, so vermag das Steuergerät in vielen Fällen zusätzlich zu diesem Raum die Position dieses Abstrahlers in diesem Raum zu bestimmen.

In einer Ausgestaltung der Erfindung stellt mindestens eine Empfangs-Einheit eine ortsfeste Koppeleinheit, insbesondere eine elektrische Steckdose oder Datendose, bereit. Eine korrespondierende Gegen-Koppeleinheit, insbesondere ein passender Stecker, eines elektrischen Verbrauchers lässt sich lösbar mit dieser ortsfesten Koppeleinheit verbinden, insbesondere in diese Steckdose oder Datendose einstecken. Diese Steckdose kann eine Koppelstelle zu einem öffentlichen stationären Spannungsversorgungsnetz sein, in Deutschland beispielsweise ein 230V-AC- Netz, oder ein lokales stationäres Spannungsversorgungsnetz. Die Koppeleinheit kann auch eine Koppelstelle zu einem stationären Datenkommunikationsnetz bereitstellen und beispielsweise als Netzwerk-Dose oder Telefon-Dose oder Fernseh-Dose ausgestaltet sein.

In einer anderen Ausgestaltung stellt mindestens eine Empfangs-Einheit eine Betätigungseinheit für einen elektrischen Verbraucher bereit. Diese Betätigungseinheit kann z.B. ein Lichtschalter oder ein Dimmer für eine Beleuchtungsvorrichtung sein oder auch ein Schalter, um einen Antrieb für ein Stellglied oder einen sonstigen elektrischen Verbraucher einzuschalten oder auszuschalten oder stufenlos zu steuern.

Diese Ausgestaltungen lassen sich kombinieren. Insbesondere kann eine erfindungsgemäße Anordnung sowohl mindestens eine Empfangs-Einheit, welche eine Koppeleinheit bereitstellt, als auch mindestens eine Empfangs-Einheit, welche eine Betätigungseinheit bereitstellt, umfassen. Bevorzugt lässt die erfindungsgemäße Anordnung sich aus einem Baukasten mit mindestens zwei unterschiedlichen Mengen von Empfangs-Einheiten zusammenstellen, nämlich einer Menge, die mindestens eine Art von Koppeleinheiten bereitstellt, und einer Menge, die mindestens eine Art von Betätigungseinheiten bereitstellt. Der Baukasten kann unterschiedliche Mengen von Koppeleinheiten, z.B. unterschiedlich standardisierte Steckdosen oder sonstige Koppeleinheiten für verschiedene Netze, und / oder verschiedene Sorten von Betätigungseinheiten bereitstellen.

In einer bevorzugten Ausgestaltung befindet sich mindestens eine Ortungs-Antenne, besonders bevorzugt die jeweilige Ortungs-Antenne jeder Empfangs-Einheit, vor der Wand-Ebene der Wand, an welcher die Empfangs-Einheit montiert ist. Die Ortungs-Antenne ist gemäß dieser Ausgestaltung also vollständig vor der Wand angeordnet. Dadurch ist sichergestellt, dass diese Wand sich nicht zwischen dem oder einem Abstrahler und der Ortungs-Antenne befindet, solange der Abstrahler und die Empfangs-Einheit sich in demselben Raum befinden. Verhindert wird, dass die Wand Funkwellen, welche die Empfangs-Einheit empfangen und / oder abstrahlen soll, abschwächt oder abschirmt, was zu Fehlern oder Ausfällen bei der Ortung führen kann. Diese unerwünschte Abschwächung oder Abschirmung wird auch dann vermieden, wenn der Abstrahler sich aktuell nahe der Wand befindet und Abstrahler-Funkwellen daher in einem spitzen Winkel zur Wand ausgesendet werden und auf diese Ortungs-Antennen auftreffen. Falls eine Ortungs-Antenne sich hinter der Wand-Ebene befinden würde, beispielsweise hinter einer Koppeleinheit und in einer Unterputz-Dose, so könnte diese Wand die Abstrahler-Funkwellen abschwächen oder abschirmen oder unerwünscht reflektieren. Weiterhin wird verhindert, dass ein hinter der Wand-Ebene befindlicher Montagerahmen der Empfangs-Einheit Funkwellen abschirmt oder abschwächt. Ein solcher Montagerahmen ist häufig aus einem Metall hergestellt. Bemerkung: Gerade in Krankenhäusern wird häufig verlangt, dass Wände eine hohe Abschirmung für Funkwellen erzielen, damit medizinische Geräte nicht von anderen medizinischen Geräten oder von weiteren abstrahlenden Geräten, z.B. Smrtphones, in unerwünschter Weise beeinflusst werden.

Erfindungsgemäß umfasst jede Empfangs-Einheit jeweils ein Gehäuse, welches - bis auf optionale Aussparungen der Koppeleinheit oder Betätigungseinheit - die übrigen Teile der Empfangs-Einheit vollständig umgibt. Bevorzugt umfasst dieses Gehäuse einen Gehäuse-Vorderteil, das vor der Wand-Ebene angeordnet ist, nachdem die Empfangs-Einheit an einer Wand montiert ist, und in den Raum hineinragt, sowie ein Gehäuse-Hinterteil, welches hinter der Wand-Ebene angeordnet ist und den Hinterbau bereitstellt oder umgibt oder sich mit einem Hinterbau einer Koppeleinheit oder Betätigungseinheit verbinden lässt.

Bevorzugt ist das Material des Gehäuse-Vorderteils durchlässig für Funkwellen, also sowohl für die Funkwellen, welche die Empfangs-Einheit z.B. beim Übermitteln von Ortungs-Signalen abstrahlt, als auch für die zu empfangenden Abstrahler-Funkwellen. Bevorzugt ist das Material hingegen resistent gegen Reinigungsmittel, welche sich zum Reinigen und zum Desinfizieren des Gehäuse-Vorderteils verwenden lassen. Eine solche Reinigung wird insbesondere in Krankenhäusern oder sonstigen öffentlichen Gebäude oder an Bord von öffentlichen Verkehrsmitteln oder sonstigen Fahrzeugen regelmäßig, beispielsweise mindestens einmal täglich, durchgeführt, um die Ausbreitung von Keimen zu verhindern. Die Verwendung eines solchen resistenten Materials, insbesondere eines resistenten Kunststoffs, trägt dazu bei, dass die erfindungsgemäße Anordnung für die Verwendung als medizinisches Gerät zertifiziert werden kann, was für einen Einsatz in einem Krankenhaus oft erforderlich ist. Eine solche Resistenz gegen Reinigungsmittel wird für konventionelle Koppeleinheiten oder Betätigungseinheiten, welche im Heimbereich oder Bürobereich eingesetzt werden, nicht verlangt.

In einer Ausgestaltung ist die Ortungs-Antenne in dem Raum angeordnet, der von diesem Gehäuse-Vorderteil umschlossen wird. In einer anderen Ausgestaltung ist die Ortungs-Antenne in dem Gehäuse-Vorderteil angeordnet.

In einer Fortbildung dieser Ausgestaltung umfasst das Gehäuse-Vorderteil einen Verschluss, insbesondere einen Deckel, der relativ zu der Wand, an welcher die Empfangs-Einheit montiert ist, zwischen einer geschlossenen Position und einer geöffneten Position bewegbar ist. Wenn der Verschluss in der geöffneten Position ist, ist die bereitgestellte Koppeleinheit oder Betätigungseinheit zugänglich. Insbesondere lässt sich bei geöffnetem Verschluss ein Stecker in die bereitgestellte Steckdose stecken, oder ein bereitgestellter Schalter lässt sich betätigen. Bei geschlossener Position des Verschlusses umgibt das Gehäuse-Vorderteil vollständig das Innere der Empfangs-Einheit. Bevorzugt ist der Verschluss beweglich an einer zum Gehäuse-Vorderteil gehörenden Fronteinheit angeordnet. Sowohl der Verschluss als auch die Fronteinheit sind aus dem oder einem resistenten Material hergestellt. Die Empfangs-Einheit vermag sowohl bei geöffnetem als auch bei geschlossenem Verschluss Funkwellen auszusenden und zu empfangen und Ortungs-Signale zu übermitteln. Bevorzugt ist diese Fronteinheit einstückig ausgebildet, besonders bevorzugt monolithisch, d.h. sie wird in einem einzigen Fertigungsschritt hergestellt, z.B. durch Gießen.

Möglich ist auch, keinen Verschluss vorzusehen.

Bevorzugt gehört eine Oberfläche der bereitgestellten Koppeleinheit oder Betätigungseinheit zu einer Oberfläche des Gehäuses.

Jede Empfangs-Einheit umfasst mehrere elektrische Verbraucher, insbesondere die Ortungs-Antenne sowie optional eine Kommunikations-Einheit, welche per Kabel oder mittels Funkwellen Ortungs-Signale von der Empfangs-Einheit an das Steuergerät übermittelt. In einer Ausgestaltung umfasst mindestens eine Empfangs-Einheit eine eigene Spannungsversorgungseinheit, insbesondere eine Batterie. Dadurch kann die Empfangs-Einheit auch ohne Verbindung zu einem stationären Spannungsversorgungsnetz oder bei einem zeitweisen Ausfall eines zentralen Spannungsversorgungsnetzes weiter arbeiten und ist von Schwankungen in einem stationären Spannungsversorgungsnetz weniger betroffen.

In einer anderen Ausgestaltung ist mindestens eine Empfangs-Einheit an ein stationäres Spannungsversorgungsnetz angeschlossen und mit diesem elektrisch verbunden, insbesondere an ein öffentliches Spannungsversorgungsnetz. Dieses stationäre Spannungsversorgungsnetz vermag elektrische Verbraucher in dem Gebäude oder Fahrzeug mit elektrischer Spannung zu versorgen. Die elektrischen Verbraucher der Empfangs-Einheit werden ebenfalls über dieses stationäre Spannungsversorgungsnetz versorgt. Bevorzugt umfasst die Empfangs-Einheit einen Spannungswandler, welcher eine Netzspannung des stationären Spannungsversorgungsnetzes in eine Verbrauchs-Spannung transformiert. Mit dieser Verbrauchs-Spannung lassen sich elektrische Verbraucher der Empfangs-Einheit elektrisch versorgen. Diese Ausgestaltung erspart die Notwendigkeit, eine eigene Spannungsversorgungseinheit in einer Empfangs-Einheit bereitstellen, überwachen und bei Bedarf austauschen zu müssen. Platz für eine eigene Spannungsversorgungseinheit in der Empfangs-Einheit wird eingespart. In einer Fortbildung dieser Ausgestaltung wird dieses stationäre Spannungsversorgungsnetz zusätzlich dafür verwendet, um Daten zwischen einer Empfangs-Einheit und dem Steuergerät auszutauschen.

In einer Alternative ist mindestens eine Empfangs-Einheit an ein Datenkommunikationsnetz angeschlossen und wird über dieses Datenkommunikationsnetz mit elektrischer Spannung versorgt, beispielsweise mittels "Power over Ethernet".

Diese Ausgestaltungen lassen sich kombinieren, und dadurch lassen sich die Vorteile dieser Ausgestaltungen kombinieren. Beispielsweise umfasst eine Empfangs-Einheit sowohl eine eigene Spannungsversorgungseinheit als auch eine elektrische Verbindung mit einem stationären Spannungsversorgungsnetz oder Datenkommunikationsnetz. Oder die Anordnung umfasst zwei Varianten von Empfangs-Einheiten, nämlich eine erste Variante mit einer eigenen Spannungsversorgungseinheit und eine zweite Variante, die an ein stationäres Spannungsversorgungsnetz oder Datenkommunikationsnetz anschließbar ist, oder lässt sich aus einem Baukasten mit zwei solchen Varianten bereitstellen.

In einer Ausgestaltung umfasst der oder mindestens ein Abstrahler eine eigene Quelle für Funkwellen und strahlt diese Funkwellen unabhängig von den Empfangs-Einheiten aus. In einer anderen Ausgestaltung ist mindestens eine Empfangs-Einheit als eine Sende-Empfangs-Einheit ausgestaltet. Der oder mindestens ein Abstrahler, bevorzugt jeder Abstrahler, ist als ein Transponder ausgestaltet. Die oder jede Sende-Empfangs-Einheit sendet Ortungs-Funkwellen aus. Wenn diese Ortungs-Funkwellen auf einen Transponder auftreffen, löst dieses Ereignis den Schritt aus, dass der als Transponder ausgestaltete Abstrahler Abstrahler-Funkwellen aussendet. Die oder jede Sende-Empfangs-Einheit empfängt abgestrahlte Funkwellen von dem oder jedem Transponder, der sich im Empfangsbereich befindet.

In einer Ausgestaltung verwendet mindestens eine, bevorzugt jede Sende-Empfangs-Einheit der Anordnung ein übliches drahtloses Übertragungsverfahren, um mit einem Transponder zu kommunizieren und hierbei Funkwellen auszusenden und zu empfangen, insbesondere eines der folgenden Übertragungsverfahren:
- Radio Frequency Identification (RFID),
- Near Field Communication (NFC),
- Bluetooth, insbesondere Bluetooth Low Energy (BLE),
- Ultra Wideband,
- WLAN.

Auf dem Markt sind viele Geräte für derartige Verfahren verfügbar. Die Ausgestaltung mit dem Transponder erspart die Notwendigkeit, dass ein mobiler Abstrahler, der an einem Gerät montiert ist oder von einer Person getragen wird, eine eigene Energiequelle umfassen muss, welche genug Energie zum Abstrahlen von Funkwellen unabhängig von den Empfangs-Einheiten aufweist. Diese Energiequelle könnte andere Geräte unerwünscht beeinflussen. Ausreichend ist es, dass die oder jede Sende-Empfangs-Einheit Ortungs-Funkwellen ausstrahlt und der Transponder als Reaktion auf den Empfang von auftreffenden Ortungs-Funkwellen selbst Funkwellen abstrahlt.

Erfindungsgemäß übermittelt jede Empfangs-Einheit der Anordnung Ortungs-Signale an das räumlich entfernte Steuergerät. Diese Übermittlung kann kabelgebunden oder drahtlos durchgeführt werden. In einer Ausgestaltung umfasst mindestens eine Empfangs-Einheit, bevorzugt jede Empfangs-Einheit, jeweils eine Kommunikations-Antenne. Mithilfe dieser Kommunikations-Antenne vermag die Empfangs-Einheit die Ortungs-Signale, die diese Empfangs-Einheit erzeugt hat, drahtlos an das Steuergerät zu übermitteln. Dank der drahtlosen Übermittlung ist es nicht erforderlich, ein Kabel eigens für die Anordnung zu verlegen, was oft nicht möglich oder nicht gewünscht und oft mit größerem Aufwand verbunden ist. Optional vermag die Empfangs-Einheit über diese Kommunikations-Antenne mittels Funkwellen Steuerbefehle vom Steuergerät oder von einem Betätigungsgerät, z.B. einem Smartphone, zu empfangen. Bevorzugt ist nicht nur die Ortungs-Antenne, sondern auch die Kommunikations-Antenne einer Empfangs-Einheit vor der Wand-Ebene angeordnet. Dadurch beeinträchtigt die Wand nicht die Übermittlung von Ortungs-Signalen an das Steuergerät und optional von Steuerbefehlen an die Empfangs-Einheit.

In einer anderen Ausgestaltung verwendet mindestens eine Empfangs-Einheit ein stationäres Spannungsversorgungsnetz, um Ortungs-Signale zu übermitteln. In der Regel ist ein solches Spannungsversorgungsnetz ohnehin vorhanden. In dieser Ausgestaltung sind die Empfangs-Einheiten der Anordnung und das Steuergerät an das stationäre Spannungsversorgungsnetz angeschlossen. Dieses stationäre Spannungsversorgungsnetz versorgt die Empfangs-Einheit und das Steuergerät mit elektrischer Spannung und überträgt zusätzlich die Ortungs-Signale an das Steuergerät. Bevorzugt werden die Ortungs-Signale dem elektrischen Strom im Spannungsversorgungsnetz aufmoduliert. Bevorzugt besitzen die Empfangs-Einheit und das Steuergerät jeweils einen entsprechenden Adapter. Ein Verfahren, um ein stationäres Spannungsversorgungsnetz nicht nur zur Energieversorgung, sondern zusätzlich zur Datenübermittlung zu verwenden, ist unter der Bezeichnung PowerLAN oder auch Powerline bekannt geworden. Falls eine Empfangs-Einheit eine Koppelstelle zu einem Datenkommunikationsnetz bereitstellt, so kann diese Empfangs-Einheit Ortungs-Signale auch über dieses Datenkommunikationsnetz an das Steuergerät übermitteln.

Diese Ausgestaltungen lassen sich kombinieren. Beispielsweise umfasst mindestens eine Empfangs-Einheit sowohl eine Kommunikations-Antenne für die drahtlose Übermittlung als auch einen Adapter, um Ortungs-Signale über ein stationäres Spannungsversorgungsnetz zu übermitteln. Diese gewollte Redundanz steigert die Betriebssicherheit. Oder die Anordnung umfasst zwei Varianten von Empfangs-Einheiten, nämlich eine Empfangs-Einheit mit einer Kommunikations-Antenne und eine Empfangs-Einheit mit einem Adapter, oder lässt sich aus einem Baukasten mit zwei solchen Varianten bereitstellen.

In einer Ausgestaltung umfasst mindestens eine Empfangs-Einheit, bevorzugt jede Empfangs-Einheit, der erfindungsgemäßen Anordnung jeweils mindestens ein Anzeigeelement und / oder ein Betätigungselement, welches vor der Wand-Ebene angeordnet ist und beispielsweise in das Gehäuse-Vorderteil eingelassen ist. Das oder mindestens ein Anzeigeelement umfasst beispielsweise eine LED-Anzeige, welche den aktuellen Status der Empfangs-Einheit anzeigt. Das oder mindestens ein Betätigungselement umfasst beispielsweise eine Taste oder ein Rädchen, wobei die Empfangs-Einheit nach Betätigen der Taste oder des Rädchens automatisch in einen vordefinierten Zustand gelangt. Eine konventionelle Koppeleinheit oder Betätigungseinheit bietet weniger Platz für ein solches Anzeigeelement oder ein solches Betätigungselement. Dank des Anzeigeelements und des Betätigungselements lässt die erfindungsgemäße Empfangs-Einheit sich leichter überwachen und betätigen und reparieren.

Erfindungsgemäß umfasst jede Empfangs-Einheit jeweils eine Ortungs-Antenne, auf welche Funkwellen auftreffen können. Optional umfasst mindestens eine Empfangs-Antenne, bevorzugt jede Empfangs-Antenne, zusätzlich eine Kommunikations-Antenne, um drahtlos Ortungs-Signale an das Steuergerät zu übermitteln und optional Steuerbefehle drahtlos zu empfangen.

In einer Ausgestaltung umfasst mindestens eine Empfangs-Einheit, bevorzugt jede Empfangs-Einheit, jeweils eine Platine. Die Ortungs-Antenne sowie die optionale Kommunikations-Antenne sind auf dieser Platine montiert. Wenn die Empfangs-Einheit an einer Wand montiert ist, befindet sich die Platine bevorzugt vollständig oder wenigstens teilweise vor der Wand-Ebene dieser Wand. Die Platine wird von dem Gehäuse umgeben und dadurch vor mechanischen und chemischen Eigenschaften geschützt. In der Ausgestaltung, in der die Platine vollständig oder wenigstens teilweise vor der Wand-Ebene befindet, schirmt die Wand nicht die Platine ab und dämpft daher nicht Strahlen, die ein Bauteil auf der Platine erreichen und / oder von einem Bauteil auf der Platine abgestrahlt werden. Das Gehäuse ist für Strahlen zu einem höheren Grad durchlässig als die Wand. Außerdem befinden die Platine und das jedes Bauteil auf der Platine sich bevorzugt vor einem Hinterbau der Empfangseinheit. Dieser Hinterbau umfasst in der Regel metallische Bestandteile, welche Strahlen dämpfen und/oder verfälschen können. Diese Dämpfung oder Verfälschung tritt aber nicht auf, wenn die Platine und die Bauteile auf der Platine sich vor dem Hinterbau befinden. Weiterhin ist dann, wenn die Platine sich vor der Wand-Ebene befindet, die Ableitung von überschüssiger Wärme leichter. Bevorzugt erstreckt die Platine sich in eine Ebene, die parallel zur Wand-Ebene ist.

In einer Ausgestaltung umfasst die Empfangs-Einheit eine Fronteinheit. Nachdem die Empfangs-Einheit an einer Wand montiert ist, ist diese Fronteinheit vollständig oder wenigstens teilweise vor der Wand-Ebene dieser Wand angeordnet. Ein Bestandteil der Fronteinheit zeigt zur Wand hin. Dieser Bestandteil ist beispielsweise eine Aufnahmeeinheit einer Koppeleinheit, in welche hinein sich ein Stecker stecken lässt, oder eine nach hinten zeigenden Bestandteil einer Betätigungseinheit.

Die Ausgestaltung, dass ein Bestandteil der Fronteinheit zur Wand-Ebene hin zeigt, lässt sich mit der Ausgestaltung kombinieren, dass eine Platine der Empfangs-Einheit sich vollständig oder wenigstens teilweise vor der Wand-Ebene befindet. Diese Platine weist gemäß einer bevorzugten Realisierung eine Aussparung auf. Bevorzugt umgibt die Platine vollständig diese Aussparung. Die Aussparung ist beispielsweise kreisförmig. Der zur Wand hin zeigende Bestandteil der Fronteinheit ist durch diese Aussparung in der Platine hindurchgeführt. Die Platine umgibt also vollständig oder wenigstens teilweise den zur Wand hin zeigenden Bestandteil.
Diese Ausgestaltung spart Bautiefe ein verglichen mit einer Ausgestaltung, bei welcher sich die Fronteinheit vollständig vor der Platine befindet. Unter der "Bautiefe" wird die Strecke verstanden, um welche die Empfangs-Einheit vor der Wand-Ebene vorsteht. Verglichen mit einer Ausgestaltung, bei der die Platine sich - gesehen in einer Blickrichtung auf die Wand zu - oberhalb oder unterhalb oder neben dem zur Wand hin zeigenden Bestandteil der Fronteinheit befindet, ermöglicht die Ausgestaltung mit der Aussparung in der Platine eine größere Platine und / oder eine geringere Abmessung in einer Ebene parallel zur Wand-Ebene. Weil verglichen mit anderen möglichen Ausgestaltungen eine größere Platine möglich ist, können verschiedene Bauteil mit einem größeren Abstand zueinander auf der Platine montiert werden. Dadurch ist die Gefahr geringer, ein Bauteil auf der Platine ein anderes Bauteil in unerwünschter Weise beeinflusst. In manchen Fällen befindet sich der zur Wand hin zeigende Bestandteil der Fronteinheit zwischen zwei Bauteil auf der Platine, was die Gefahr einer unerwünschten Beeinflussung weiter reduziert.

Möglich ist, dass das Profil der Aussparung hinsichtlich Form und Größe an das Außenprofil des vorstehenden Bestandteils angepasst ist, sodass zwischen der Platine und dem Bestandteil praktisch kein Spalt entsteht. Die Platine hat kein Spiel relativ zu dem vorstehenden Bestandteil, was oft unerwünscht ist.

Bevorzugt vermag die Anordnung mehrere Gegenstände und optional mehrere Personen zu orten, und zwar bevorzugt gleichzeitig zu orten. In dieser Ausgestaltung umfasst die Anordnung jeweils einen Abstrahler pro Gegenstand, der zu orten ist. Dank der Mehrzahl von Empfangs-Einheiten vermag die Anordnung gleichzeitig mehrere Abstrahler zu orten. Bevorzugt umfasst jeder Abstrahler jeweils eine eigene Speichereinheit, in welcher eine eindeutige Kennung dieses Abstrahlers abgespeichert ist. Diese Kennung unterscheidet diesen Abstrahler von allen anderen Abstrahlern der Anordnung. Jeder Abstrahler erzeugt die Abstrahler-Funkwellen dergestalt, dass in den Abstrahler-Funkwellen die Kennung dieses Abstrahlers erhalten ist. Dadurch vermag die Anordnung zu erkennen, welche Abstrahler-Funkwellen von welchem Abstrahler ausgesandt wurden, und dadurch unterschiedliche Abstrahler und somit verschiedene Gegenstände mit jeweils mindestens einem Abstrahler voneinander zu unterscheiden.

In einer Ausgestaltung vermag das Steuergerät zu bewirken, dass eine Ausgabeeinheit, beispielsweise ein Bildschirm, angesteuert und auf dieser Ausgabeeinheit ein Lageplan eines Gebäudes oder Fahrzeugs, in dem die erfindungsgemäße Anordnung implementiert ist, dargestellt wird. In diesem dargestellten Lageplan wird die Position des oder jedes georteten Abstrahlers lagerichtig dargestellt. Oder wenigstens wird dargestellt, welche Gegenstände und / oder Abstrahler sich aktuell in welchem Raum befinden. Diese Darstellung wird bevorzugt regelmäßig und / oder nach einer entsprechenden Benutzereingabe aktualisiert. Bevorzugt hat das Steuergerät Lesezugriff auf eine Tabelle, welche eine Zuordnung umfasst, welcher Abstrahler aktuell mit welchem Gegenstand verbunden ist. Optional zeigt eine weitere Tabelle, auf weiche das Steuergerät wenigstens zeitweise Lesezugriff hat, welche Person aktuell welchen Gegenstand mit einem Abstrahler mit sich führt. Das Steuergerät veranlasst, dass in dem dargestellten Lageplan eine Kennzeichnung des Gegenstands bzw. der Person lagerichtig angezeigt wird.

In einer Ausgestaltung vermag das Steuergerät eine Suche im Gebäude oder Fahrzeug nach einem Gegenstand, z.B. einem medizinischen Gerät, und / oder nach einer Person auszulösen. Nachdem eine Kennzeichnung des gesuchten Gegenstands oder der gesuchten Person eingegeben und an das Steuergerät übermittelt worden ist, ermittelt das Steuergerät, welcher Abstrahler aktuell an diesem Gegenstand montiert ist, und optional, welche Person diesen gesuchten Gegenstand aktuell mit sich führt oder welchen Abstrahler die gesuchte Person mit sich führt. Falls das Steuergerät keinen solchen Abstrahler ermitteln kann und daher der Gegenstand bzw. die Person nicht gefunden werden konnte, so gibt es eine entsprechende Fehlermeldung aus. Ansonsten versucht das Steuergerät, diesen Abstrahler zu orten. Das Steuergerät gibt in einer von einem Menschen wahrnehmbaren Form die aktuelle Position oder wenigstens den Raum des georteten Abstrahlers und damit des gesuchten Gegenstands bzw. der gesuchten Person aus - oder eine Fehlermeldung, dass der Abstrahler nicht geortet werden konnte.
Bevorzugt vermag die erfindungsgemäße Anordnung einen Alarm auszugeben, falls sie einen Abstrahler nicht zu orten vermag. Dadurch lässt sich insbesondere die oft unerwünschte Situation erkennen, dass ein Gegenstand mit einem Abstrahler und optional eine Person mit diesem Gegenstand sich außerhalb eines vorgegebenen Bereichs innerhalb des Gebäudes oder Fahrzeugs befindet oder dass ein Abstrahler ausgefallen ist.

In einer Ausgestaltung prüft das Steuergerät, ob sich ein georteter Abstrahler in einem vorgegebenen Bereich innerhalb eines Gebäudes oder Fahrzeugs befindet. Falls festgestellt wird, dass der Abstrahler sich in diesem vorgegebenen Bereich befindet, so wird in einer Ausgestaltung ein Alarm ausgegeben, in einer abweichenden Ausgestaltung dann ein Alarm ausgegeben, wenn dieser Abstrahler mit einem Gegenstand verbunden ist und optional dieser Gegenstand von einer Person getragen wird, wobei dieser Bereich für den Gegenstand bzw. die Person gesperrt ist. Dadurch ermöglicht die Erfindung es, ein Geofencing oder eine Sicherung durchzuführen.

In einer Ausgestaltung empfängt das Steuergerät eine Anforderung, nach einer bestimmten Person zu suchen - genauer: nach einer Person, die einen Gegenstand mit einem Abstrahler der erfindungsgemäßen Anordnung mit sich führt. Das Steuergerät ermittelt, welcher Abstrahler und / oder welcher Gegenstand mit einem Abstrahler dieser Person aktuell zugeordnet ist. Sobald das Steuergerät den zugeordneten Abstrahler ermittelt hat, löst das Steuergerät den Vorgang aus, diesen Abstrahler zu orten. Ist dieser Abstrahler geortet, so löst das Steuergerät den Vorgang aus, die Position der Person, welcher der geortete Abstrahler zugeordnet ist, in einer von einem Menschen wahrnehmbaren Form auszugeben und / oder eine Mitteilung an diese Person oder an eine Ausgabeeinheit in einen Raum, in dem die Person sich gemäß der Ortung befindet, zu übermitteln.
In einer Ausgestaltung empfängt das Steuergerät eine Anforderung, nach einem Gerät mit einer bestimmten Eigenschaft zu suchen. Das Steuergerät ermittelt, welche Geräte diese Eigenschaft aufweisen und welcher Abstrahler welchem Gerät mit dieser Eigenschaft aktuell zugeordnet sind. Das Steuergerät löst den Vorgang aus, jeden dergestalt ermittelten Abstrahler zu orten. Falls hierbei mehrere Abstrahler geortet werden, so wählt das Steuergerät einen dieser Abstrahler gemäß einem vorgegebenen Kriterium aus. Das Kriterium ist beispielsweise die Länge des Weges von dem jeweiligen Abstrahler zu einem vorgegebenen Punkt, beispielsweise einem vorgegebenen Einsatzort, und / oder eine Eigenschaft oder aktuelle Nutzung des Geräts. Das Steuergerät gibt die Position dieses Abstrahlers und somit die Position des zugeordneten Geräts mit der vorgegebenen Eigenschaft in einer von einem Menschen wahrnehmbaren Form aus.

Im Folgenden wird die Erfindung anhand eines Ausführungsbeispiels beschrieben. Hierbei zeigt:
- Figur 1: schematisch, wie ein Beatmungsgerät mithilfe der Anordnung geortet wird;
- Figur 2: schematisch in einer Draufsicht, wie zwei Beatmungsgeräte gleichzeitig mithilfe der Anordnung geortet werden;
- Figur 3: eine Darstellung von Ortungsergebnissen auf einem Bildschirm;
- Figur 4: die Aufnahmeeinheit einer konventionellen Steckdose;
- Figur 5: den Hinterbau einer konventionellen Steckdose;
- Figur 6: eine Ausgestaltung einer Sende-Empfangs-Einheit der erfindungsgemäßen Anordnung in einer Blickrichtung aus der Wand heraus;
- Figur 7: eine abweichende Ausgestaltung einer Sende-Empfangs-Einheit der Anordnung in der Blickrichtung von Figur 6;
- Figur 8: eine Sende-Empfangs-Einheit in einer vertikalen Ebene, die senkrecht auf der Wand-Ebene steht;
- Figur 9: in einer Explosionszeichnung eine Sende-Empfangs-Einheit, welche eine Steckdose bereitstellt;
- Figur 10: eine Sende-Empfangs-Einheit, welche einen Dimmer bereitstellt;
- Figur 11: die vordere Oberfläche der vorderen Platine einer Sende-Empfangs-Einheit;
- Figur 12: die hintere Oberfläche der Platine von Figur 11.

Im Ausführungsbeispiel wird die Erfindung verwendet, um in einem Krankenhaus medizinische Geräte sowie optional Personen zu orten. Festgestellt werden soll mindestens, in welchem Raum des Krankenhauses sich ein gesuchtes Gerät bzw. eine gesuchte Person befindet. In einer Ausgestaltung soll zusätzlich festgestellt werden, wo in diesem Raum sich das Gerät bzw. die Person befindet.

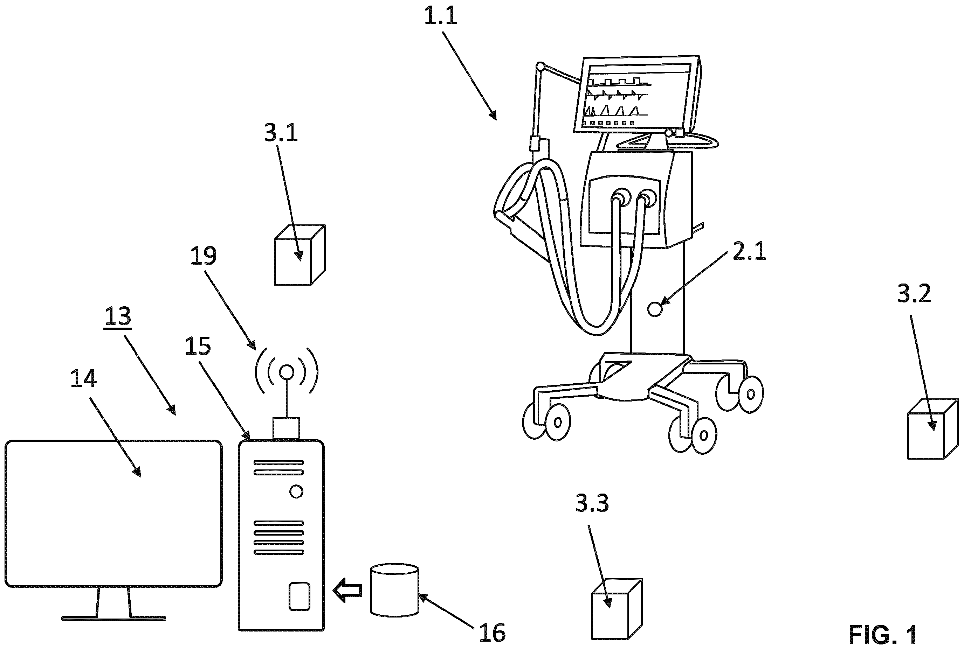

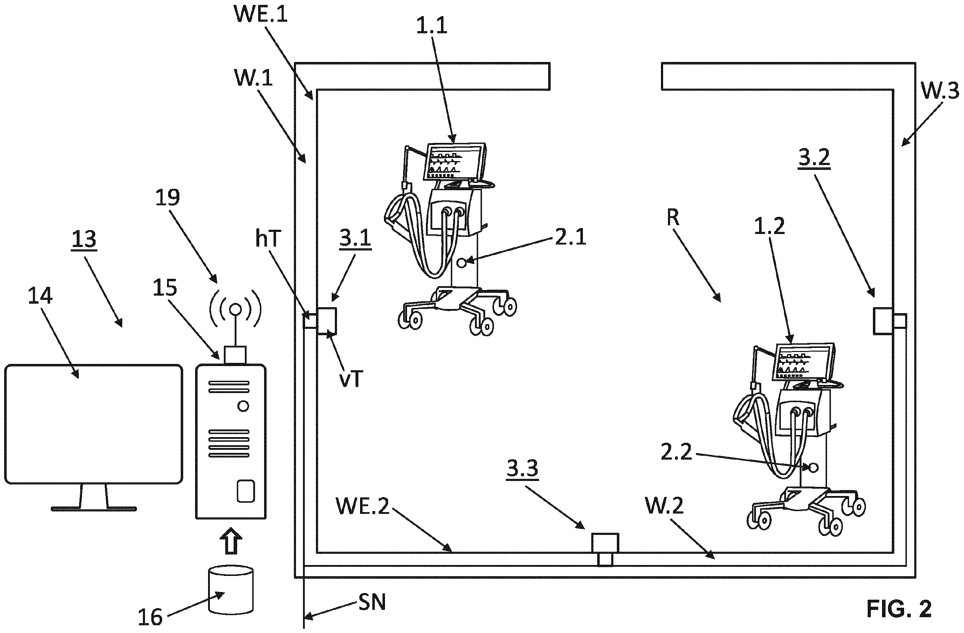

Figur 1 und Figur 2 zeigen in einer perspektivischen Darstellung bzw. in einer Draufsicht
- zwei zu ortende Beatmungsgeräte 1.1 und 1.2, welche jeweils einen Patienten künstlich zu beatmen vermögen und sich dank jeweils eines Fahrgestells bewegen lassen,
- die vier Wände W.1, W.2, ... eines Raums R, in dem sich die beiden Beatmungsgeräte 1.1 und 1.2 aktuell befinden, sowie
- die zum Inneren dieses Raumes R zeigenden Wand-Ebenen WE.1, WE.2, ... der Wände W.1, W.2, ...

Außerdem zeigen Figur 1 und Figur 2 folgende Bestandteile der erfindungsgemäßen Anordnung des Ausführungsbeispiels:
- drei ortsfeste Sende-Empfangs-Einheiten 3.1, 3.2, 3.3, die an die Wand W.1 bzw. W.2 bzw. W.3 des Raums R montiert sind,
- zwei Abstrahler in Form von zwei Transpondern 2.1 und 2.2, die an jeweils einer äußeren Oberfläche des Beatmungsgeräts 1.1 bzw. 1.2 befestigt sind, und
- einen Zentralrechner 13 umfassend ein signalverarbeitendes zentrales Steuergerät 15, eine Funk-Kommunikationseinheit 19 zur drahtlosen Kommunikation mit den ortsfesten Sende-Empfangs-Einheiten 3.1, 3.2, 3.3 und eine Ausgabeeinheit mit einem Bildschirm 14.

Jede Sende-Empfangs-Einheit 3.1, 3.2, 3.3 umfasst jeweils einen vorderen Teil vT, der sich vor der jeweiligen Wand-Ebene WE.1, WE.2, WE.3 der Wand W.1, W.2, W.3 befindet und in den Raum R hineinragt, sowie einen hinteren Teil hT, der sich in der Wand W.1, W.2, W.3 und hinter der Wand-Ebene WE.1, WE.2, WE.3 befindet. Der hintere Teil hT hat bevorzugt die äußeren Abmessungen des Hinterbaus einer konventionellen Steckdose oder ist mit einem solchen Hinterbau mechanisch und optional elektrisch verbunden, was weiter unten erläutert wird. Die elektrischen Kontaktstellen des hinteren Teils hT sind genauso angeordnet wie die entsprechenden Kontaktstellen einer konventionellen Steckdose oder Lichtschalters und sind mit einem stationären Spannungsversorgungsnetz des Krankenhauses elektrisch verbunden. Die drei Sende-Empfangs-Einheiten 3.1, 3.2, 3.3 sind dadurch mit einem stationären Spannungsversorgungsnetz SN des Krankenhauses elektrisch verbunden.

Jede Sende-Empfangs-Einheit 3.1, 3.2, 3.3 stellt im Ausführungsbeispiel jeweils eine konventionelle elektrische Steckdose bereit. Möglich ist auch, dass mindestens eine oder sogar jede Sende-Empfangs-Einheit 3.1, 3.2, 3.3 eine sonstige Koppeleinheit, z.B. eine Datendose, oder eine Betätigungseinheit bereitstellt.

In einer Ausgestaltung sind die beiden Transponder 2.1 und 2.2 als passive Einheiten ausgestaltet, d.h. sie umfassen keine eigene Spannungsversorgungseinheit und sind auch nicht mit einem Spannungsversorgungsnetz verbunden. Die Transponder 2.1 und 2.1 können alternativ auch als aktive Einheiten mit eigener Spannungsversorgungseinheit ausgestaltet sein, beispielsweise mit jeweils einer Batterie. Jeder Transponder 2.1 und 2.2 umfasst jeweils einen Datenspeicher, in dem eine eindeutige Kennung dieses Transponders abgespeichert ist. Diese eindeutige Kennung unterscheidet diesen Transponder von jedem anderen Transponder, der in diesem Krankenhaus verwendet wird. Die Funkwellen, welche dieser Transponder 2.1,2.2 abstrahlt, enthalten als Information diese eindeutige Kennung.

Jede Sende-Empfangs-Einheit 3.1, 3.2, 3.3 steht - bei geeigneter Position eines Geräts 1.1, 1.2 relativ zur Sende-Empfangs-Einheit 3 - wenigstens zeitweise in einer drahtlosen Datenkommunikation mit jedem Transponder 2.1, 2.2. Diese Datenkommunikation wird bevorzugt mit Hilfe von mindestens einem der folgenden Übertragungsverfahren realisiert:
- Radio Frequency Identification (RFID),
- Near Field Communication (NFC),
- Bluetooth, insbesondere Bluetooth Low Energy (BLE),
- Ultra Wideband,
- WLAN.

Falls die Ortung mittels RFID oder NFC durchgeführt wird, so ist eine sehr genaue Ortung bei einem geringen Abstand zwischen einem Transponder 2.1, 2.2 und einer Sende-Empfangs-Einheit 3.1, 3.2, 3.3 möglich, insbesondere bei einem Abstand unter 1 m.

Falls zur Ortung Bluetooth verwendet wird, so wird meist die Stärke des Signals ermittelt, welches auf eine Sende-Empfangs-Einheit 3.1, 3.2, 3.3 auftrifft, und hieraus wird die Entfernung zum Transponder 2.1, 2.2 ermittelt. Die Ortung wird beispielsweise mittels Triangulation oder Trilateration durchgeführt oder indem die Funkzelle, in der sich der Transponder 2.1, 2.2 aktuell befindet, ermittelt wird.

Bluetooth lässt sich gut zur Ortung verwenden, solange der Abstand zwischen einem Transponder 2.1, 2.2 und einer Sende-Empfangs-Einheit 3.1, 3.2, 3.3 unterhalb von 40 m liegt.

Falls zur Ortung WLAN verwendet wird, so wird meist die Stärke des auftreffenden Signals ermittelt. Die besten Ergebnisse bei der Ortung lassen sich erzielen, wenn zwischen einem Transponder 2.1, 2.2 und einer Sende-Empfangs-Einheit 3.1, 3.2, 3.3 ein Abstand von 5 bis 15 m auftritt.

Möglich ist, dass zunächst versucht wird, eine Datenkommunikation mit einem ersten Übertragungsverfahren herzustellen und dann, wenn dies nicht gelingt, ein anderes Übertragungsverfahren zu verwenden. Bevorzugt entscheidet jede Sende-Empfangs-Einheit 3.1, 3.2, 3.3 autonom, welches Übertragungsverfahren sie anwendet.
Falls eine Sende-Empfangs-Einheit 3.1, 3.2, 3.3 Funkwellen von einem Transponder 2.1, 2.2 erhält, so lässt sich in der Regel mindestens feststellen, dass sich ein Gerät 1.1, 1.2 mit diesem Transponder in demselben Raum wie die Sende-Empfangs-Einheit 3.1, 3.2, 3.3 befindet. Denn in der Regel schirmen die Wände Funkwellen so stark ab, dass sie eine Wand überhaupt nicht durchdringen können oder mindestens signifikant abgeschwächt werden. Falls sogar mindestens drei Sende-Empfangs-Einheiten 3.1, 3.2, 3.3 Funkwellen von demselben Transponder 2.1, 2.2 erhalten, so lässt sich zusätzlich die Position eines Geräts 1.1, 1.2 mit diesem Transponder 2.1, 2.2 ermitteln.
Bevorzugt umfasst jede Sende-Empfangs-Einheit 3.1, 3.2, 3.3 jeweils ein eigenes lokales Steuergerät sowie eine Ortungs-Antenne und sendet mithilfe der Ortungs-Antenne Ortungs-Funkwellen aus. Mithilfe dieser Ortungs-Funkwellen werden die Transponder 2.1 und 2.2 mit elektrischer Energie versorgt und dazu veranlasst, Transponder-Funkwellen auszusenden. Mithilfe ihrer Ortungs-Antenne vermag jede Sende-Empfangs-Einheit 3.1, 3.2, 3.3 auftreffende Transponder-Funkwellen zu empfangen und abhängig von den auftreffenden Transponder-Funkwellen Ortungs-Signale zu erzeugen. Diese Ortungs-Signale umfassen bevorzugt zu jedem Abtast-Zeitpunkt jeweils die Information, von welchen Transpondern (von Transpondern mit welchen Kennungen) die Sende-Empfangs-Einheit 3.1, 3.2, 3.3 Transponder-Funkwellen empfangen hat, bevorzugt einen Zeitstempel sowie für jeden Transponder, von dem Transponder-Funkwellen auftreffen,
- jeweils die Peilung dieses Transponders 2.1, 2.2 in einem dreidimensionalen Raum (Richtung einer Linie von dem Transponder 2.1, 2.2 zu der Sende-Empfangs-Einheit 3.1, 3.2, 3.3) und / oder
- die Laufzeit, welche die Funkwellen von der Sende-Empfangs-Einheit 3.1, 3.2, 3.3 zum Transponder 2.1, 2.2 und zurück benötigt haben, und / oder
- die Signalstärke, mit der die Transponder-Funkwellen die Sende-Empfangs-Einheit 3.1, 3.2, 3.3 erreichen.

Sowohl aus der Laufzeit als auch aus der Signalstärke lässt sich die Entfernung zwischen dem Transponder 2.1, 2.2 und der jeweiligen Sende-Empfangs-Einheit 3.1, 3.2, 3.3 näherungsweise ermitteln.

Jede Sende-Empfangs-Einheit 3.1, 3.2, 3.3 umfasst im Ausführungsbeispiel weiterhin eine Kommunikations-Antenne. Mithilfe ihrer Kommunikations-Antenne vermag jede Sende-Empfangs-Einheit 3.1, 3.2, 3.3 die erzeugten Ortungs-Signale drahtlos an die Funk-Kommunikationseinheit 19 des Zentralrechners 13 zu übermitteln. Bevorzugt wird für diese Übermittlung ein Übertragungsverfahren gemäß einem Standard von WLAN oder Ultra Wideband verwendet. Das Steuergerät 15 ortet zu jedem Abtast-Zeitpunkt jedes Gerät, welches einen Transponder 2.1, 2.2 aufweist und welches von mindestens einer Sende-Empfangs-Einheit, bevorzugt von mindestens drei Sende-Empfangs-Einheiten 3.1, 3.2, 3.3, geortet worden ist, d.h. in den Ortungs-Signalen von wenigstens drei Sende-Empfangs-Einheiten auftritt. In einer Ausgestaltung führt das zentrale Steuergerät 15 jeweils eine Triangulation pro Transponder 2.1, 2.2 durch, um diesen Transponder zu orten. In einer Ausgestaltung verwendet das Steuergerät 15 die Peilung, d.h. Richtung der auftreffenden Funkwellen, und / oder Unterschiede in den jeweiligen Laufzeiten und / oder Unterschiede in den Signalstärken zwischen verschiedenen Sende-Empfangs-Einheiten 3.1, 3.2, 3.3 und demselben Transponder 2.1, 2.2.

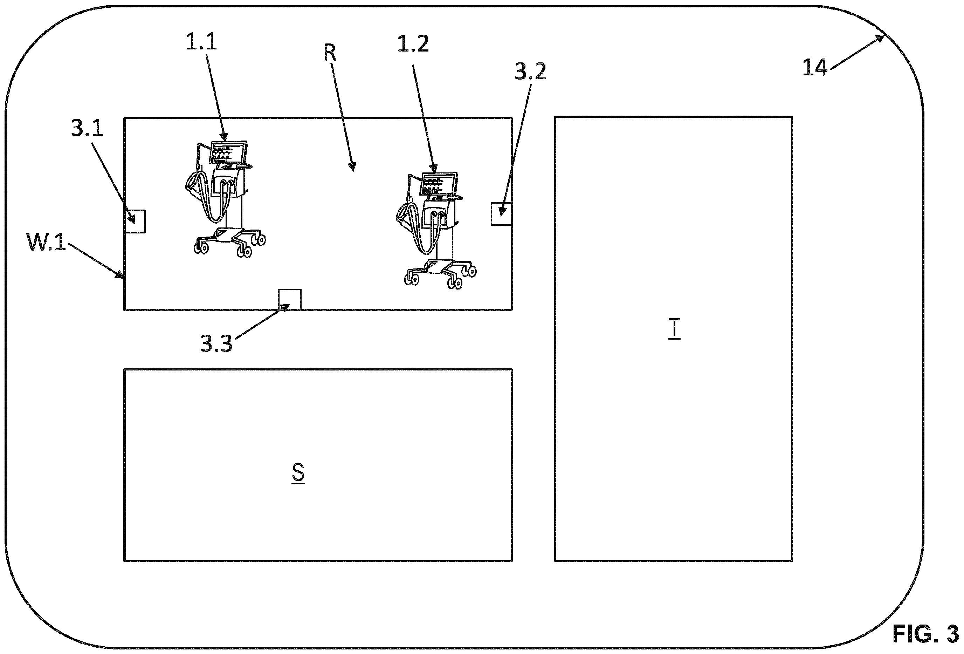

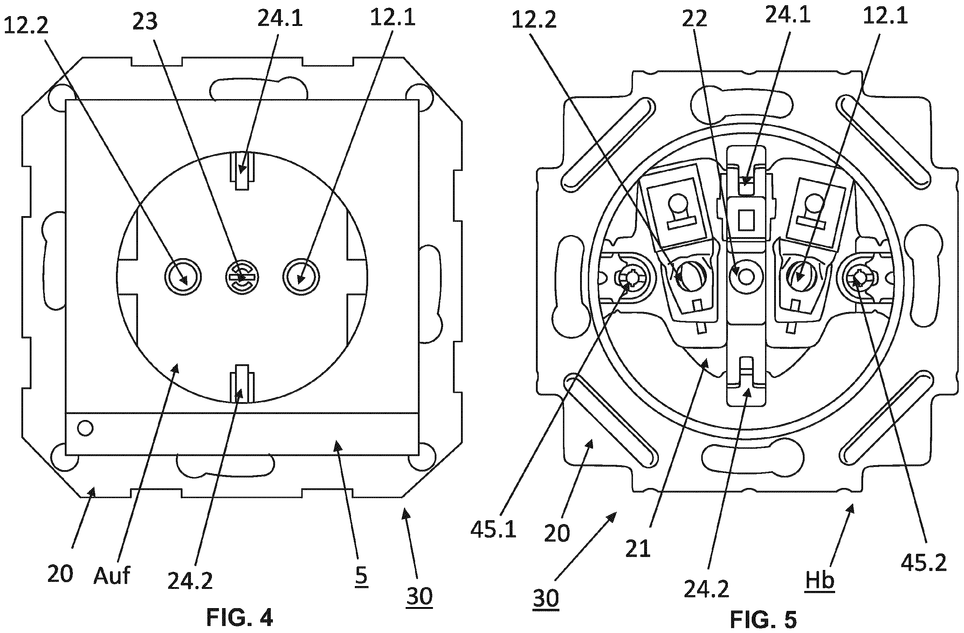

Bevorzugt hat der Zentralrechner 13 wenigstens zeitweise Lesezugriff auf einen Datenspeicher 16. In diesem Datenspeicher 16 ist eine rechnerverfügbare Tabelle abgespeichert. Diese Tabelle umfasst die Information, welcher Transponder 2.1, 2.2 aktuell an welchem Gerät 1.1, 1.2 befestigt ist, sowie die jeweilige eindeutige Kennung jedes Transponders 2.1, 2.2. In dem Datenspeicher 16 ist weiterhin ein rechnerverfügbarer Lageplan des Krankenhauses abgespeichert. Dieser Lageplan zeigt den Raum R mit den Wänden W.1, W.2, ... und bevorzugt die jeweilige Position jeder Sende-Empfangs-Einheit 3.1, 3.2, 3.3 in diesem Raum R und außerdem zwei weitere Räume S und T des Krankenhauses, an deren Wänden ebenfalls Sende-Empfangs-Einheiten montiert sein können. Das Steuergerät 15 ermittelt die aktuelle Position jedes georteten Geräts, beispielsweise die jeweilige Position jedes Beatmungsgeräts 1.1 und 1.2. Das zentrale Steuergerät 15 veranlasst, dass der Zentralrechner 13 auf dem Bildschirm 14 den Lageplan mit den aktuellen Positionen der geordneten Geräte 1.1, 1.2, ... darstellt - oder wenigstens, welches Gerät sich aktuell in welchem Raum befindet. Figur 3 zeigt beispielhaft diese Darstellung auf dem Bildschirm 14.
Eine erfindungsgemäße Sende-Empfangs-Einheit des Ausführungsbeispiels hat Gemeinsamkeiten mit einer konventionellen Steckdose. Eine konventionelle Steckdose 30 besitzt bekanntlich eine Fronteinheit 5, vgl. Figur 4 (Blickrichtung auf die Wand), sowie einen Hinterbau Hb, vgl. Figur 5 (gleiche Blickrichtung, Fronteinheit 5 wird nicht gezeigt). Der Hinterbau Hb umfasst
- einen Metallrahmen 20,
- einen Keramik-Einsatz 21, der mit zwei Schrauben 45.1, 45.2 am Metallrahmen 20 befestigt ist,
- zwei federnde Aufnahmeelemente 12.1, 12.2 für die beiden Stifte eines elektrischen Steckers,
- zwei Kontaktfedern 24.1, 24.2 für die beiden Schutzkontakte des Steckers und
- ein Gewinde 22.
Die Fronteinheit 5 umfasst eine Platte, eine scheibenförmige Aufnahmeeinheit Auf für einen elektrischen Stecker und zwei Löcher in der Aufnahmeeinheit Auf für die beiden Aufnahmeelemente 12.1, 12.2. Eine Schraube 23 ist in das Gewinde 22 eingeschraubt.

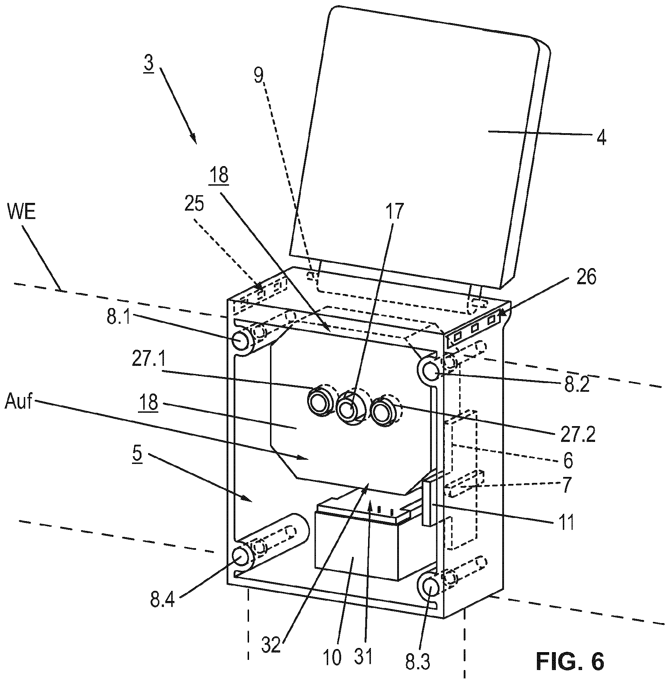

Figur 6, Figur 7 und Figur 8 zeigen leicht unterschiedliche Varianten einer erfindungsgemäßen Sende-Empfangs-Einheit 3. Die Sende-Empfangs-Einheiten 3.1, 3.2, 3.3 des Ausführungsbeispiels können so wie in Figur 6 bis Figur 8 gezeigt aufgebaut sein.

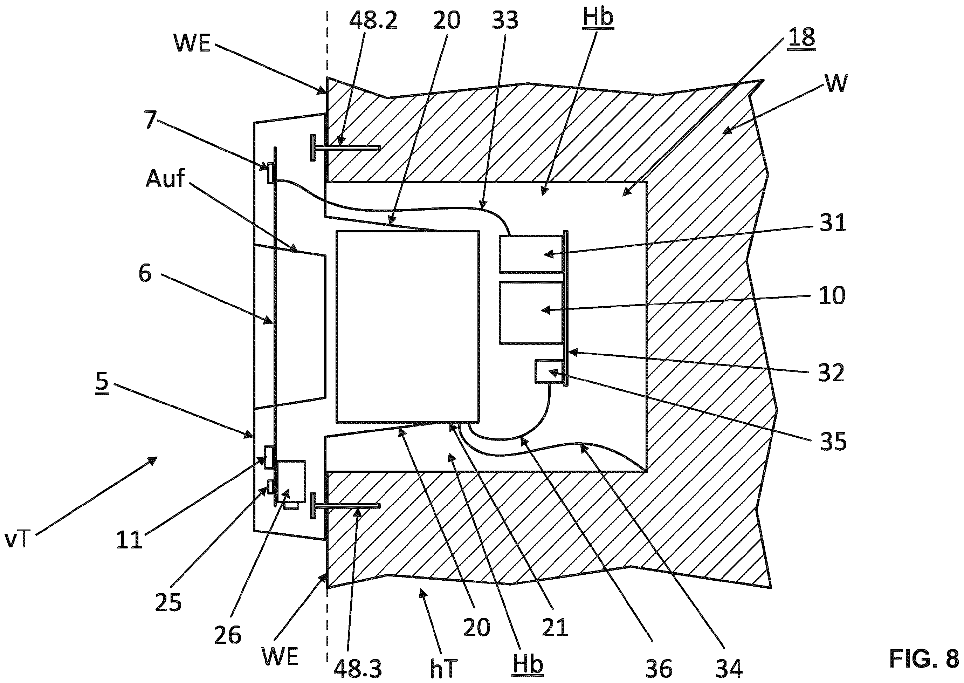

Gesehen in eine Betrachtungsrichtung auf die Zeichenebenen von Figur 6 und Figur 7 befindet sich der vordere Teil vT, der in den Raum R hineinragt und sich vor der Wand-Ebene WE befindet, hinter dem hinteren Teil hT in der Wand, wobei der hintere Teil hT in Figur 6 und Figur 7 nur schematisch dargestellt ist. Diese Wand-Ebene WE wird in Figur 6 und Figur 7 angedeutet. Figur 8 zeigt eine erfindungsgemäße Sende-Empfangs-Einheit 3 in eine Betrachtungsrichtung parallel zur Wand-Ebene WE. Die Wand-Ebene WE steht also senkrecht auf der Zeichenebene von Figur 8.

Gezeigt werden folgende Komponenten der beispielhaften Sende-Empfangs-Einheit 3:
- eine Fronteinheit 5, die sich vor der Wand-Ebene WE befindet und eine Aufnahmeeinheit Auf für einen elektrischen Stecker bereitstellt,
- mehrere Anzeigeelemente 25, z.B. LEDs, welche in Aussparungen in der Fronteinheit 5 eingelassen sind,
- mehrere Betätigungselemente 26, z.B. Taster, welche in Aussparungen in der Fronteinheit 5 eingelassen sind,
- ein Deckel 4 (nur Figur 6 und Figur 7),
- ein Gehäuse-Hinterteil 18, welches sich hinter der Wand-Ebene WE befindet,
- ein horizontal angeordnetes Scharnier 9 (nur Figur 6 und Figur 7), durch welches der Deckel 4 relativ zur Fronteinheit 5 drehbar ist, wobei der Deckel 4 in einer geöffneten Position gezeigt wird,
- vier Durchgangslöcher 8.1, 8.2, ..., mit denen sich die Sende-Empfangs-Einheit 3 an einer Wand W montieren lässt, indem vier Schrauben 48.1, 48.2, ... durch diese Durchgangslöcher 8.1, 8.2, ... hindurch geführt und in die Wand W eingeschraubt werden.
- zwei kreisrunde Löcher 27.1, 27.2 für zwei röhrenförmige Aufnahmeelemente 12.1 und 12.2 (vgl. Figur 4 und Figur 5), welche ihrerseits zwei Stifte eines elektrischen Steckers eines elektrischen Geräts aufzunehmen vermögen,
- ein zentral zwischen den beiden Löchern 27.1, 27.2 positioniertes Durchgangsloch 17 für eine weitere Schraube 23,
- zwei Aussparungen 28.1, 28.2 für zwei Kontaktfedern 24.1, 24.2 (vgl. Figur 4 und Figur 5),
- eine vordere Platine 6, die sich vollständig vor der Wand-Ebene WE befindet,
- eine auf der vorderen Platine 6 montierte Ortungs-Antenne 7,
- eine ebenfalls auf der vorderen Platine 6 montierte Kommunikations-Antenne 11,
- ein Spannungswandler 10,
- ein lokales Steuergerät 31,
- eine hintere Platine 32, auf weiche der Spannungswandler 10 und das Steuergerät 31 montiert sind,
- mehrere Kabelverbindungen 33, welche die Anzeigeelemente 25 und die Betätigungselemente 26 mit dem Steuergerät 31 verbinden,
- mehrere Stromkabel 34, welche den Hinterbau Hb mit einem stationären Spannungsversorgungsnetz SN, z.B. für 230 V Wechselstrom, verbinden,
- eine Anschlussklemme 35 auf der hinteren Platine 32 und
- mehrere Stromkabel 36, welche den Hinterbau Hb der Sende-Empfangs-Einheit 3 mit der Anschlussklemme 35 verbinden.

In dem gezeigten Beispiel ist das lokale Steuergerät 31 auf der hinteren Platine 32 montiert. Möglich ist auch, dass das lokale Steuergerät 31 auf der vorderen Platine 6 montiert ist.

Die an der Wand W montierte Sende-Empfangs-Einheit 3 stellt eine Steckdose bereit. Indem ein Stecker eines elektrischen Geräts in diese Steckdose eingesteckt wird, werden zwei Schutzkontakte dieses Steckers mit den Kontaktfedern 24.1, 24.2 verbinden, vgl. Figur 6 und Figur 7, und zwei Stifte dieses Steckers in die beiden Aufnahmeelemente 12.1 und 12.2 eingeführt, und dieses Gerät wird dadurch mit dem stationären Spannungsversorgungsnetz SN des Krankenhauses verbunden. Beispielsweise lässt ein nicht gezeigter Stecker dieses Beatmungsgeräts 1.1, 1.2 sich in eine Aufnahmeeinheit Auf der bereitgestellten Steckdose einstecken. Die zur Ortung beitragenden Funktionalität der Sende-Empfangs-Einheit 3 verbraucht daher keinen Steckdosenplatz und hat Merkmale einer konventionellen Steckdose 30.

Die in Figur 6 bis Figur 8 gezeigten Varianten lassen sich mit einem Hinterbau Hb einer konventionellen Steckdose verbunden oder stellen einen solchen Hinterbau Hb bereit. Dies wird im Folgenden beschrieben.

In einer Version, die in Figur 8 gezeigt wird, stellt die Sende-Empfangs-Einheit 3 einen solchen Hinterbau Hb einer konventionellen Steckdose bereit. Im Gehäuse-Hinterteil 18 ist z.B. ein konventioneller Steckdosen-Einsatz eingesetzt, wie er in Figur 5 gezeigt ist. Diese Sende-Empfangs-Einheit 3 wird wie eine konventionelle Steckdose 30 in eine Unterputz-Dose montiert. Der Hinterbau Hb wird mit den Stromkabeln 34 verbunden. Die Stromkabel 34 versorgen zum einen den Steckdosen-Einsatz und zum anderen dem Spannungswandler 10 mit elektrischer Spannung. Möglich ist, dass ein Verteiler die Stromkabel 34 mit dem Spannungswandler 10 und dem Steckdosen-Einsatz verbindet. Möglich ist auch, dass mehrere Stromkabel 34 parallel angeordnet sind.

In einer anderen Version, die in Figur 6 und Figur 7 gezeigt wird, lässt sich die Sende-Empfangs-Einheit 3 mit einem solchen Hinterbau Hb verbinden, auch wenn dieser Hinterbau Hb bereits in der Wand montiert ist und bei der Montage der Sende-Empfangs-Einheit 3 in der Wand verbleibt. In dieser anderen Variante liegt die rückseitige Fläche des Gehäuse-Hinterteils 18 flächig an dem Metallrahmen 20 an. In das Gehäuse-Hinterteil 18 sind zwei kreisrunde Löcher 27.1, 27.2 für die beiden Aufnahmeelemente 12.1, 12.2, ein weiteres kreisrundes Loch 18 für die Schraube 23 sowie zwei Aussparungen 28.1, 28.2 für die beiden Kontaktfedern 24.1, 24.2 eingelassen. Die beiden Aufnahmeelemente 12,1, 12.2 sowie die beiden Kontaktfedern 24.1, 24.2 des Hinterbaus Hb ragen durch die beiden Löcher 27.1, 27.2 bzw. die beiden Aussparungen 28.1, 28.2 in die montierten Sende-Empfangs-Einheit 3 hinein und ermöglichen es, einen elektrischen Stecker einzustecken. Optional sind in das Gehäuse-Hinterteil 18 zwei korrespondierende Sacklöcher für die Köpfe der beiden Schrauben 45.1, 45.2 eingelassen.

Um eine Sende-Empfangs-Einheit 3 gemäß der anderen Variante anstelle einer konventionellen Steckdose 30 zu montieren, wird die Schraube 23 gelöst und danach die Fronteinheit Fr entfernt. Die Sende-Empfangs-Einheit 3 wird auf den nunmehr frei liegenden Hinterbau Hb aufgesetzt, sodass die beiden Aufnahmeelemente 12.1, 12.2 durch die beiden korrespondierenden Löcher 27.1, 27.2 und die beiden Kontaktfedern 24.1, 24.2 durch die beiden korrespondierenden Aussparungen 28.1, 28.2 im Gehäuse-Hinterteil 18 hindurch ragen. Die Schraube 23 wird durch das Loch 17 hindurch in das Gewinde 22 eingeschraubt.

Die Sende-Empfangs-Einheit 3 umfasst in einer Ausgestaltung einen Deckel 4 und eine Fronteinheit 5. Die Aufnahmeeinheit Auf ist in die Fronteinheit 5 eingelassen. In einer geschlossenen Position bilden der Deckel 4 und die Fronteinheit 5 zusammen ein Gehäuse-Vorderteil der Sende-Empfangs-Einheit 3, wobei das Gehäuse-Vorderteil 4, 5 - bis auf Fertigungstoleranzen und Unebenheiten der Wand-Ebene WE - ohne Abstand an die Wand-Ebene WE angrenzt und nach der Montage in den Raum R hinein ragt. Dieses Gehäuse-Vorderteil 4, 5 schützt die Sende-Empfangs-Einheit 3 vor chemischen und mechanischen Einflüssen sowie vor Flüssigkeiten. In der geöffneten Position lässt sich ein Stecker in die bereitgestellte Steckdose stecken. Die Sende-Empfangs-Einheit 3 vermag sowohl bei geöffnetem als auch bei geschlossenem Deckel 4 Funkwellen auszusenden und zu empfangen und Ortungs-Signale zu übermitteln. Das Gehäuse-Hinterteil 18 befindet sich hinter der Wand-Ebene WE. Das Gehäuse-Vorderteil 4, 5 sowie das Gehäuse-Hinterteil 18 bilden zusammen ein Gehäuse, welches sowohl bei geöffnetem als auch bei geschlossenem Deckel 4 die übrigen Teile der Sende-Empfangs-Einheit 3 - bei geöffnetem Deckel 4 bis auf die Löcher 27.1, 27.2, 18, 28.1, 28.2 - vollständig umgibt.

Im Ausführungsbeispiel sind sowohl der Deckel 4 als auch die Fronteinheit 5 aus einem harten Kunststoff hergestellt, der für Funkwellen durchlässig ist, aber resistent gegen Desinfektionsmittel und Reinigungsmittel ist, die in einem Krankenhaus verwendet werden, um Oberflächen zu desinfizieren und zu reinigen und hierbei Keime abzutöten. Solche Reinigungsmittel sind häufig aggressiv. Der Kunststoff des Gehäuse-Vorderteils 4, 5 bildet auch nach einer häufigen Reinigung eine glatte Oberfläche, an der sich praktisch kein Schmutz und keine Keime ansammeln können. Insbesondere weil der Deckel 4 und die Fronteinheit 5 aus einem derartigen Kunststoff hergestellt sind, ist es möglich, jede Sende-Empfangs-Einheit 3.1, 3.2, ... als Medizinprodukt zertifizieren zu lassen, z.B. gemäß der Norm EN 60601.

In einer anderen Ausgestaltung ist der Deckel 4 fortgelassen. Auch in dieser Ausgestaltung umgibt die Fronteinheit 5 und das Gebäude-Hinterteil 18 bevorzugt vollständig das Innere der Sende-Empfangs-Einheit 3. Möglich ist, eine konventionelle Kindersicherung in die Steckdose einzusetzen.
Die drei in Figur 6 bis Figur 8 gezeigten Varianten der Sende-Empfangs-Einheit 3 unterscheiden sich voneinander u.a. durch die unterschiedliche Positionierung der vorderen Platine 6 relativ zu den Aufnahmeelementen 12.1, 12.2 und somit zu der bereitgestellten Steckdose.

Der Spannungswandler 10 ist nach der Montage der Sende-Empfangs-Einheit 3 über die Stromkabel 35 elektrisch mit dem stationären Spannungsversorgungsnetz SN verbunden. In einer Ausgestaltung ist der Spannungswandler 10 mit zwei nicht gezeigten Kontaktfedern elektrisch verbunden. Wenn die Sende-Empfangs-Einheit 3 mit einem Hinterbau Hb einer konventionellen Steckdose 30 verbunden wird und die Aufnahmeelemente 12.1, 12.2 des Hinterbaus Hb durch die beiden Löcher 27.1, 27.2 hindurch geführt werden, so kontaktieren diese Aufnahmeelemente 12.1, 12.2 diese beiden Kontaktfedern für den Spannungswandler 10.
Der Spannungswandler 10 transformiert die Spannung des Spannungsversorgungsnetzes SN (in Deutschland 230 V Wechselstrom) in eine Versorgungsspannung für die elektrischen Verbraucher der Sende-Empfangs-Einheit 3, beispielsweise in 5 V Gleichstrom (Versorgungs-Spannung eines USBkompatiblen Geräts). Die vordere Platine 6 ist elektrisch mit dem Spannungswandler 10 verbunden.

Die Ortungs-Antenne 7 wird beispielsweise durch eines der folgenden Verfahren hergestellt:
- subtraktiv strukturierte Fertigung (z.B. Folien- oder PCB-Antenne),
- additiv metallisierende Fertigung (z.B. MID-Technik, AM printed electronics, ...),
- unter Verwendung von oder als THT- oder SMD-Bauteile,
- als Peitschenantenne oder
- als Stabantenne.

Die gleichen Verfahren lassen sich anwenden, um die Kommunikations-Antenne 11 herzustellen.

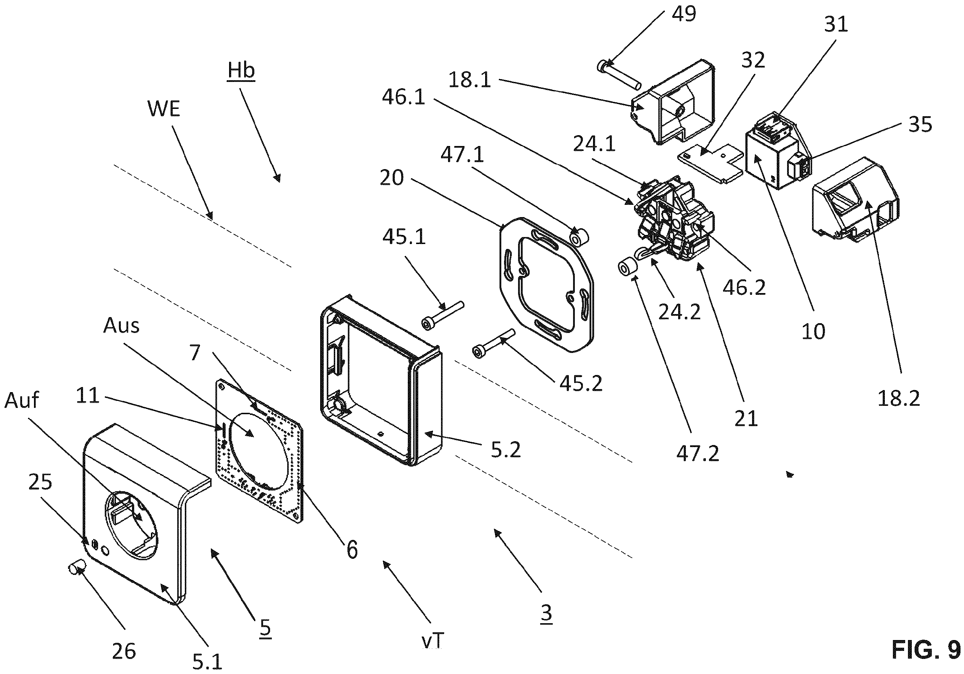

Figur 9 zeigt in einer Explosionszeichnung eine beispielhafte Sende-Empfangs-Einheit 3, welche eine Steckdose bereitstellt. Gleiche Bestandteile haben die gleichen Bezugszeichen wie in vorigen Figuren. Dargestellt werden folgende Bestandteile, die nach der Montage vor der Wand-Ebene WE angeordnet sind:
- die Frontplatte 5.1 der Fronteinheit 5, welche die Aufnahmeeinheit Auf für einen elektrischen Stecker bereitstellt,
- das Anzeigeelement 25 und das Betätigungselement 26, welche in die Frontplatte 5.1 eingelassen sind,
- die Ummantelung 5.2 der Fronteinheit 5, welche nach der Montage mit der Frontplatte 5.1 fluiddicht verbunden ist, und
- die vordere Platine 6, auf welcher die Ortungs-Antenne 7 und die Kommunikations-Antenne 11 montiert sind und welche eine kreisrunde Aussparung Aus in der Mitte der vorderen Platine 6 aufweist, durch welche hindurch die Aufnahmeeinheit Auf hindurch geführt ist.
In die vordere Platine 6 ist eine Aussparung Aus eingelassen, die im Ausführungsbeispiel kreisförmig ist und etwa mittig in der Platine angeordnet ist. Die Aufnahmeeinheit Auf ist durch diese kreisförmige Aussparung Aus hindurchgeführt. Bevorzugt umgibt die vordere Platine 6 von allen Seiten die Aufnahmeeinheit Auf, ohne dass ein Spalt auftritt.

Folgende Bestandteile, die sich nach der Montage hinter der Wand-Ebene WE befinden, werden in Figur 9 dargestellt:
- der Metallrahmen 20,
- der Keramikeinsatz 21,
- zwei Schraublöcher 46.1 und 46.2 im Keramikeinsatz 21,
- zwei Hülsen 47.1 und 47.2 zwischen dem Metallrahmen 20 und dem Keramikeinsatz 21,
- zwei Schrauben 45.1 und 45.2, die durch zwei korrespondierende Durchgangslöcher im Metallrahmen 20 und durch die beiden Hülsen 47.1 bzw. 47.2 hindurch geführt sind und sich in die Schraublöcher 46.1 bzw. 46.2 hineinschrauben lassen,
- das Steuergerät 31,
- die hintere Platine 32,
- die Anschlussklemme 35 und
- zwei Gehäusehälften 18.1 und 18.2, welche sich mithilfe einer Schraube 49 zusammenschrauben lassen und dann das Gehäuse-Hinterteil 18 bilden.

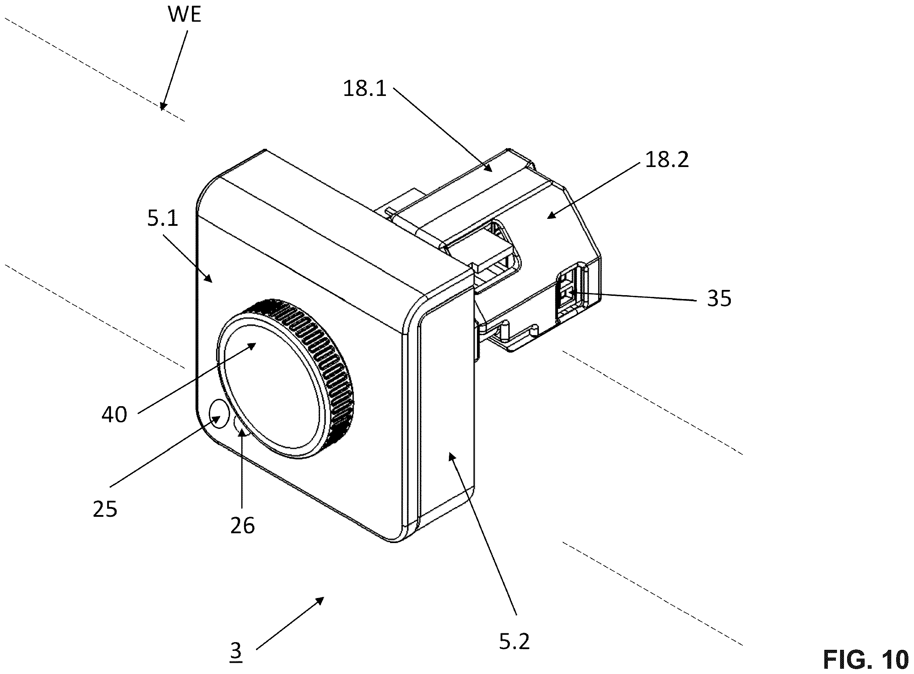

Figur 10 zeigt eine beispielhafte Sende-Empfangs-Einheit 3, welche einen Dimmer bereitstellt. Gezeigt werden folgende Bestandteile:
- die Frontplatte 5.1,
- die Ummantelung 5.2,
- ein Betätigungselement 40 in Form eines geriffelten Rades, welches in die Frontplatte 51 eingelassen ist,
- das Anzeigeelement 25,
- das Betätigungselement 26,
- die beiden Gehäusehälften 18.1 und 18.2 des Gehäuse-Hinterteils 18 und
- die Anschlussklemme 35.

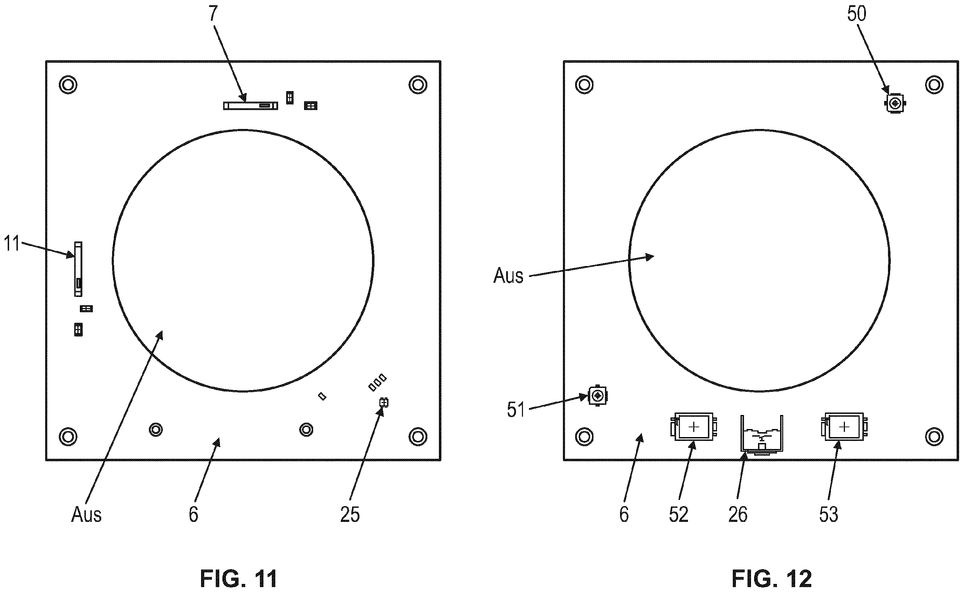

Figur 11 und Figur 12 zeigen die vordere Oberfläche bzw. die hintere Oberfläche der annähernd quadratischen vorderen Platine 6. Die Bezeichnungen "vordere Oberfläche" und "hintere Oberfläche" beziehen sich auf eine Blickrichtung auf die Wand W zu. Auf die hintere Oberfläche der vorderen Platine 6 sind folgende Anschlüsse montiert:
- ein Anschluss 50 für ein Kabel, welches das Steuergerät 31 mit der Ortungs-Antenne 7 verbindet,
- ein Anschluss 51 für ein Kabel, welches das Steuergerät 31 mit der Kommunikations-Antenne 11 verbindet,
- ein Anschluss 52 für ein Kabel, welches das Steuergerät 31 mit dem Betätigungselement 26 verbindet, und
- ein Anschluss 53 für ein Kabel, welches das Steuergerät 31 mit dem Anzeigeelement 25 verbindet.

Dargestellt wird weiterhin die kreisrunde Aussparung Aus in der Mitte der vorderen Platine 6, durch welche hindurch die Aufnahmeeinheit Auf der Fronteinheit 5 geführt ist, sowie vier kreisrunde Aussparungen nahe den Ecken, durch die nicht gezeigte Schrauben zur Befestigung der vorderen Platine 6 hindurch geführt werden können.

**BEZUGSZEICHENLISTE**

| | |
|---|---|
| 1.1, 1.2 | zu ortenden Beatmungsgeräte, tragen jeweils einen Transponder 2.1, 2.2 |
| 2.1, 2.2 | Transponder, der an einem Beatmungsgerät 1.1, 1.2 befestigt ist, sendet Transporter-Funkwellen aus |
| 3 | beispielhafte Sende-Empfangs-Einheit der Anordnung, umfasst eine Fronteinheit 5 und in einer Ausgestaltung einen Hinterbau Hb |
| 3.1, 3.2, 3.3 | Sende-Empfangs-Einheiten, an den Wänden W.1, W.2, W.3 montiert, wie die Sende-Empfangs-Einheit 3 aufgebaut |
| 4 | optionaler Deckel der Sende-Empfangs-Einheit 3, mittels des Scharniers 9 mit der Fronteinheit 5 verbunden |
| 5 | Fronteinheit der Sende-Empfangs-Einheit 3, umgibt den vor der Wand-Ebene WE befindlichen vorderen Teil vT der Sende-Empfangs-Einheit 3, umfasst zwei Aussparungen für die röhrenförmigen Aufnahmeelemente 12.1, 12.2 und das Durchgangsloch 17, trägt mittels des optionalen Scharnier 9 den optionalen Deckel 4, bildet zusammen mit dem Deckel 4 ein Gehäuse-Vorderteil, umfasst in einer Ausgestaltung die Frontplatte 5.1 und die Ummantelung 5.2 |
| 5.1 | Frontplatte der Fronteinheit 5 |
| 5.2 | Ummantelung der Fronteinheit 5 |
| 6 | vordere Platine der Sende-Empfangs-Einheit 3, auf der die Ortungs-Antenne 7 und die Kommunikations-Antenne 11 sowie Anzeigeelemente 25 und Betätigungselemente 26 montiert sind |
| 7 | Ortungs-Antenne der Sende-Empfangs-Einheit 3, auf der Platine 6 montiert, empfängt Funkwellen von den Transpondern 2.1, 2.2 |
| 8.1, 8.2, ... | Durchgangslöcher im Gehäuse 5, ermöglichen eine Montage der Sende-Empfangs-Einheit 3 mithilfe von vier Schrauben 48.1, 48.2, ... |
| 9 | Scharnier, welches den Deckel 4 drehbar mit der Fronteinheit 5 verbindet |
| 10 | Spannungswandler, welcher Netzspannung in die Versorgungsspannung für die elektrischen Verbraucher der Sende-Empfangs-Einheit 3 transformiert |
| 11 | Kommunikations-Antenne der Sende-Empfangs-Einheit 3, auf der vorderen Platine 6 montiert, übermittelt Ortungs-Signale an den Zentralrechner 13 |
| 12.1, 12.2 | röhrenförmige Aufnahmeelemente zur Aufnahme der beiden Stifte eines elektrischen Steckers, an den Keramik-Einsatz 21 angeschraubt |
| 13 | Zentralrechner, umfasst den Bildschirm 14 und das Steuergerät 15, empfängt Ortungs-Signale von den Sende-Empfangs-Einheiten 3.1, 3.2, 3.3 |
| 14 | Bildschirm des Zentralrechners 13, vom Steuergerät 15 angesteuert |
| 15 | signalverarbeitendes zentrales Steuergerät des Zentralrechner 13, hat Lesezugriff auf die Tabelle 16, steuert den Bildschirm 14 an |
| 16 | Datenspeicher, in dem eine rechnerverfügbare Tabelle mit einer Zuordnung der Transponder 2.1, 2.2 zu den Geräten 1.1, 1.2 sowie ein rechnerverfügbarer Lageplan des Krankenhauses abgespeichert ist |
| 17 | zwischen den Aufnahmeelementen 12.1, 12.2 angeordnetes Loch für die Schraube 23 |
| 18 | Gehäuse-Hinterteil: hinter der Wand-Ebene WE befindlicher Teil des Gehäuses |
| 18.1, 18.2 | Bestandteile des Gehäuse-Hinterteils 18 |
| 19 | Funk-Kommunikationseinheit des zentralen Steuergeräts 15 |
| 20 | Metallrahmen des Hinterbaus Hb, hält den Keramik-Einsatz 21 |
| 21 | Keramik-Einsatz im Metallrahmen 20, nimmt die röhrenförmigen Aufnahmeelemente 12.1, 12.2 und das Gewinde 22 auf |
| 22 | Gewinde im Keramik-Einsatz 21, vermag die Schraube 23 aufzunehmen |
| 23 | Schraube, die sich durch das Loch 17 hindurch in das Gewinde 22 eindrehen lässt |
| 24.1, 24.2 | Kontaktfedern des Hinterbaus Hb, an den Keramik-Einsatz 21 angeschraubt |
| 25 | Anzeigeelemente, in die Fronteinheit 5 eingelassen oder auf die vordere Platine 6 aufgebracht |
| 26 | Betätigungselemente, in die Fronteinheit 5 eingelassen oder auf die vordere Platine 6 aufgebracht |
| 27.1, 27.2 | Löcher im Gehäuse-Hinterteil 18, durch welche nach einer Montage die Aufnahmeelemente 12.1, 12.2 hindurch geführt sind |
| 28.1, 28.2 | Aussparungen im Gehäuse-Hinterteil 18, durch welche nach einer Montage die Kontaktfedern 24.1, 24.2 hindurch geführt sind |
| 30 | konventionelle Steckdose, umfasst die Fronteinheit 5 und den Hinterbau Hb |
| 31 | lokales Steuergerät der Sende-Empfangs-Einheit 3 |
| 32 | hintere Platine der Sende-Empfangs-Einheit 3, auf der das lokale Steuergerät 31 und der Spannungswandler 10 montiert sind |
| 33 | Kabelverbindungen, die das Steuergerät 31 mit den Bauteilen 7, 11, 25 auf der vorderen Platine 6 verbinden |
| 34 | Stromkabel, die den Hinterbau Hb der Sende-Empfangs-Einheit 3 mit dem stationären Spannungsversorgungsnetz verbinden |
| 35 | Anschlussklemme, welche das Stromkabel 35 mit der hinteren Platine 32 und damit mit dem Spannungswandler 10 verbindet |
| 36 | Stromkabel, welche den Hinterbau Hb der Sende-Empfangs-Einheit 3 mit der Anschlussklemme 35 verbinden |
| 40 | Betätigungselement einer Sende-Empfangs-Einheit, die als Dimmer fungiert |
| 45.1, 45.2 | Schrauben, welche den Metallrahmen 20 mit dem Keramikeinsatz 21 verbinden, lassen sich in die Schraublöcher 46.1,46.2 ein Schrauben |
| 46.1, 46.2 | Schraublöcher mit Gewinde in dem Keramikeinsatz 21, nehmen die Schrauben 45.1, 45.2 auf |
| 47.1, 47.2 | Hülsen, durch welche sich die Schrauben 45.1, 45.2 durchführen lassen |
| 48.1, 48.2, | Schrauben, welche durch die Durchgangslöcher 8.1, 8.2, ... hindurch geführt sind |
| 49 | Schraube, welche die beiden Gehäusehälften 18.1, 18.2 des Gehäuse-Hinterteils 18 zusammenhält |
| 50 | Anschluss auf der vorderen Platine 6 für ein Kabel, welches das Steuergerät 31 mit der Ortungs-Antenne 7 verbindet |
| 51 | Anschluss auf der vorderen Platine 6 für ein Kabel, welches das Steuergerät 31 mit der Kommunikations-Antenne 11 verbindet |
| 52 | Anschluss auf der vorderen Platine 6 für ein Kabel, welches das Steuergerät 31 mit einem Betätigungselement 26 verbindet |
| 53 | Anschluss auf der vorderen Platine 6 für ein Kabel, welches das Steuergerät 31 mit einem Anzeigeelement 25 verbindet |
| Auf | Aufnahmeeinheit in der Fronteinheit 5 in Form eines Zylinders, welche den vorderen Teil eines elektrischen Steckers aufzunehmen vermag |
| Aus | kreisförmige Aussparung in der vorderen Platine 6, durch die hindurch die Aufnahmeeinheit Auf geführt ist |
| Hb | Hinterbau der konventionellen Steckdose 30 und einer Variante der Sende-Empfangs-Einheit 3, umfasst den Metallrahmen 20, den Keramik-Einsatz 21, das Gewinde 22 und die Kontaktfedern 24.1, 24.2 |
| hT | hinterer Teil der Sende-Empfangs-Einheit 3.1, befindet sich in der Wand W.1 hinter der Wand-Ebene WE.1 |
| R | Raum mit den Wänden W.1, W.2, ..., an denen die Sende-Empfangs-Einheiten 3.1, 3.2, ... montiert sind |
| S, T | weitere Räume im Krankenhaus |
| SN | stationäres Spannungsversorgungsnetz, welches medizinische Geräte und zusätzlich die Sende-Empfangs-Einheiten 3.1, 3.2, ... elektrisch versorgt |
| vT | vorderer Teil der Sende-Empfangs-Einheit 3.1, befindet sich vor der Wand-Ebene WE.1 |
| W | Wand, an der die Sende-Empfangs-Einheit 3 montiert ist |
| W.1, W.2, | Wände des Raums R, in dem sich die Beatmungsgeräte 1.1 und 1.2 befinden, weisen die Wand-Ebenen WE.1, W.2, ... Auf |
| WE | Wand-Ebene der Wand W |
| WE.1, WE.2, | zum inneren des Raums R zeigende Wand-Ebenen der Wände W.1, W.2, ... |

## Patentansprüche

1. Anordnung zum Orten eines Gegenstands (1.1, 1.2) in einem Gebäude (R), insbesondere in einem Krankenhaus, oder an Bord eines Fahrzeugs,
wobei die Anordnung
- mehrere ortsfeste Empfangs-Einheiten (3, 3.1, 3.2, 3.3),
- mindestens einen Abstrahler (2.1, 2.2), der mit einem zu ortenden Gegenstand (1.1, 1.2) verbunden oder verbindbar ist, und
- ein signalverarbeitendes Steuergerät (15)
umfasst,
wobei jede Empfangs-Einheit (3, 3.1, 3.2, 3.3)
- ein Gehäuse (4, 5, 18) und
- eine vom Gehäuse (4, 5, 18) umgebene oder aufgenommene Ortungs-Antenne (7)
umfasst,
wobei jede Empfangs-Einheit (3, 3.1, 3.2, 3.3) an jeweils einer Wand (W, W.1, W.2, ...) montiert oder montierbar ist,
wobei jede Empfangs-Einheit (3, 3.1, 3.2, 3.3) jeweils
- eine Koppeleinheit (Auf, Hb), insbesondere eine Steckdose, die lösbar mit einer korrespondierenden Gegen-Koppeleinheit eines elektrischen Verbrauchers oder eines datenverarbeitenden Geräts verbindbar ist, oder
- eine Betätigungseinheit (40) zum Betätigen eines elektrischen Verbrauchers umfasst oder
mit einem Hinterbau (Hb) einer solchen Koppeleinheit (Auf, Hb) oder einer solchen Betätigungseinheit (40) mechanisch verbunden oder verbindbar ist,
sodass der Hinterbau (Hb) und die mit dem Hinterbau (Hb) verbundene Empfangs-Einheit (3, 3.1, 3.2, 3.3) zusammen eine Koppeleinheit (Auf, Hb, 40) oder eine Betätigungseinheit (40) bereitstellen,
wobei der oder jeder Abstrahler (2.1, 2.2) dazu ausgestaltet ist, Abstrahler-Funkwellen abzustrahlen,
wobei jede Empfangs-Einheit (3, 3.1, 3.2, 3.3) dazu ausgestaltet ist,
- Ortungs-Signale zu erzeugen, welche mit dem Vorhandensein oder mit mindestens einer Charakteristik von Abstrahler-Funkwellen, die auf die Ortungs-Antenne (7) auftreffen, korrelieren, insbesondere mit der Signalstärke oder Signalrichtung dieser Abstrahler-Funkwellen, und
- die erzeugten Ortungs-Signale an das Steuergerät (15) zu übermitteln, und
wobei das Steuergerät (15) dazu ausgestaltet ist,
- eine Information über die jeweilige Position des oder jedes Abstrahlers (2.1, 2.2) zu ermitteln und
- für diese Positions-Ermittlung empfangene Ortungs-Signale von mindestens einer Empfangs-Einheit (3, 3.1, 3.2, 3.3) zu verwenden.

2. Anordnung nach Anspruch 1,
**dadurch gekennzeichnet, dass**
mindestens ein, bevorzugt jeder Abstrahler (2.1, 2.2) einen Transponder umfasst oder als ein Transponder ausgestaltet ist,
wobei mindestens eine, bevorzugt jede Empfangs-Einheit (3, 3.1, 3.2, 3.3) als eine Sende-Empfangs-Einheit ausgestaltet ist,
welche mithilfe ihrer Ortungs-Antenne (7) Ortungs-Funkwellen auszusenden vermag, und
wobei der oder jeder Transponder (2.1, 2.2) dazu ausgestaltet ist, abhängig von auftreffenden Ortungs-Funkwellen Abstrahler-Funkwellen abzustrahlen.

3. Anordnung nach einem der vorhergehenden Ansprüche,
**dadurch gekennzeichnet, dass**
die Ortungs-Antenne (7) von mindestens einer Empfangs-Einheit (3, 3.1, 3.2, 3.3), bevorzugt die jeweilige Ortungs-Antenne (7) jeder Empfangs-Einheit (3, 3.1, 3.2, 3.3) der Anordnung,
nach einer Montage der Empfangs-Einheit (3, 3.1, 3.2, 3.3) an einer Wand (W, W.1, W.2, ...) eines Raums (R) vor der zum Raum (R) hin zeigenden vorderen Wand-Ebene (WE, WE.1, WE.2, ...) angeordnet ist.

4. Anordnung nach einem der vorhergehenden Ansprüche,
**dadurch gekennzeichnet, dass**
das jeweilige Gehäuse (4, 5, 18) jeder Empfangs-Einheit (3, 3.1, 3.2, 3.3) einen Gehäuse-Vorderteil (4, 5) umfasst,
wobei das Gehäuse-Vorderteil (4, 5) nach einer Montage der Empfangs-Einheit (3, 3.1, 3.2, 3.3) an einer Wand (W, W.1, W.2, ...) eines Raums (R) vor der zum Raum (R) hin zeigenden vorderen Wand-Ebene (WE, WE.1, WE.2, ...) angeordnet ist und
wobei das Material des Gehäuse-Vorderteils (4, 5)
- für Funkwellen durchlässig ist und
- resistent gegen Flüssigkeiten, die zum Reinigen und Desinfizieren eines medizinischen Geräts (1.1, 1.2) verwendbar sind, ist.

5. Anordnung nach einem der vorhergehenden Ansprüche,
**dadurch gekennzeichnet, dass**
mindestens eine Empfangs-Einheit, bevorzugt jede Empfangs-Einheit (3, 3.1, 3.2, 3.3), jeweils eine vom Gehäuse (4, 5, 18) aufgenommene oder umgebene Kommunikations-Antenne (11) umfasst,
mit deren Hilfe die Empfangs-Einheit (3, 3.1, 3.2, 3.3) die von ihr erzeugten Ortungs-Signale drahtlos an das Steuergerät (15) zu übermitteln vermag, insbesondere mittels des Übertragungsverfahrens WLAN oder Ultra-Wideband.

6. Anordnung nach Anspruch 5,
**dadurch gekennzeichnet, dass**
die Kommunikations-Antenne (11) von mindestens einer Empfangs-Einheit (3, 3.1, 3.2, 3.3),
bevorzugt die jeweilige Kommunikations-Antenne (11) jeder Empfangs-Einheit (3, 3.1, 3.2, 3.3),
nach einer Montage der Empfangs-Einheit (3, 3.1, 3.2, 3.3) an einer Wand (W, W.1, W.2, ...) eines Raums (R) vor der zum Raum (R) hin zeigenden vorderen Wand-Ebene (WE, WE.1, WE.2, ...) angeordnet ist.

7. Anordnung nach einem der vorhergehenden Ansprüche,
**dadurch gekennzeichnet, dass**
mindestens eine Empfangs-Einheit (3, 3.1, 3.2, 3.3)
- an ein stationäres Spannungsversorgungsnetz (SN) angeschlossen oder anschließbar ist und
- einen Spannungswandler (10) umfasst,
wobei der Spannungswandler (10) dazu ausgestaltet ist, eine Netzspannung in eine Spannung, mit welcher mindestens ein elektrischer Verbraucher (7, 11, 31) der Empfangs-Einheit (3, 3.1, 3.2, 3.3) versorgbar ist, zu transformieren.

8. Anordnung nach einem der vorhergehenden Ansprüche,
**dadurch gekennzeichnet, dass**
mindestens eine Empfangs-Einheit (3, 3.1, 3.2, 3.3) und das Steuergerät (15) an ein stationäres Spannungsversorgungsnetz (SN) angeschlossen oder anschließbar sind und
die Empfangs-Einheit (3, 3.1, 3.2, 3.3) dazu ausgestaltet ist, die von ihr erzeugten Ortungs-Signale über das stationäre Spannungsversorgungsnetz (SN) an das Steuergerät (15) zu übermitteln,
insbesondere mittels des Übertragungsverfahrens PowerLAN.

9. Anordnung nach einem der vorhergehenden Ansprüche,
**dadurch gekennzeichnet, dass**
nach einer Montage einer Empfangs-Einheit (3, 3.1, 3.2, 3.3) der Anordnung an einer Wand (W, W.1, W.2, ...) eines Raums (R)
jede Abmessung jeder Empfangs-Einheit (3, 3.1, 3.2, 3.3) in der Wand-Ebene (WE, WE.1, WE.2, ...) gleich der entsprechenden äußeren Abmessung der Fronteinheit (5) einer konventionellen Koppeleinheit oder Betätigungseinheit, insbesondere einer Steckdose (30), ist und
die maximale Abmessung senkrecht zur Wand-Ebene (WE, WE.1, WE.2, ...) größer als die entsprechende Abmessung dieser Fronteinheit (5) ist.

10. Anordnung nach einem der vorhergehenden Ansprüche,
**dadurch gekennzeichnet, dass**
mindestens eine Empfangs-Einheit (3, 3.1, 3.2, 3.3) der Anordnung,
bevorzugt jede Empfangs-Einheit (3, 3.1, 3.2, 3.3),
- mindestens ein Anzeigeelement (25) zum Anzeigen eines Status der Empfangs-Einheit (3, 3.1, 3.2, 3.3) und / oder
- mindestens ein Betätigungselement (26) zum Verändern eines Status der Empfangs-Einheit (3, 3.1, 3.2, 3.3)
umfasst,
wobei dieses Anzeigeelement (25) bzw. dieses Betätigungselement (26) nach einer Montage der Empfangs-Einheit (3, 3.1, 3.2, 3.3) an einer Wand (W, W.1, W.2, ...) vor der Wand-Ebene (WE, WE.1, WE.2, ...) angeordnet ist.

11. Anordnung nach einem der vorhergehenden Ansprüche,
**dadurch gekennzeichnet, dass**
mindestens eine Empfangs-Einheit (3, 3.1, 3.2, 3.3) eine vom Gehäuse (4, 5, 18) umgebene Platine (6) umfasst,
auf welcher die Ortungs-Antenne (7) und die optionale Kommunikations-Antenne (11) montiert sind,
wobei nach einer Montage der Empfangs-Einheit (3, 3.1, 3.2, 3.3) an einer Wand (W, W.1, W.2, ...) die Platine (6) vollständig oder wenigstens teilweise vor der Wand-Ebene (WE, WE.1, WE.2, ...) angeordnet ist.

12. Anordnung nach Anspruch 11,
**dadurch gekennzeichnet, dass**
die Empfangs-Einheit (3, 3.1, 3.2, 3.3) eine Fronteinheit (5) umfasst, welche nach einer Montage der Empfangs-Einheit (3, 3.1, 3.2, 3.3) an einer Wand (W, W.1, W.2, ...) vollständig oder wenigstens teilweise vor der Wand-Ebene (WE, WE.1, WE.2, ...) angeordnet ist, und
die Platine (6) eine Aussparung (Aus) aufweist,
wobei ein zur Wand (W, W.1, W.2, ...) zeigender Bestandteil (Auf) der Fronteinheit (5) durch die Aussparung (Aus) in der Platine (6) hindurch geführt ist und
wobei bevorzugt die Platine (6) den Bestandteil (Auf) der Fronteinheit (5) vollständig umgibt.

13. Verwendung einer Anordnung nach einem der vorhergehenden Ansprüche zur Ortung eines Gegenstands (1.1, 1.2, ...) in einem Gebäude (R), insbesondere in einem Krankenhaus, oder an Bord eines Fahrzeugs.

14. Empfangs-Einheit (3) einer Anordnung zum Orten eines Gegenstands (1.1, 1.2, ...),
wobei die Empfangs-Einheit (3)
- ein Gehäuse (4, 5, 18) und
- eine vom Gehäuse (4, 5, 18) umgebene Ortungs-Antenne (7) umfasst und
an einer Wand (W, W.1, W.2, ...) montiert oder montierbar ist,
wobei die Empfangs-Einheit (3)
- eine Koppeleinheit (Auf, Hb), insbesondere eine Steckdose, die lösbar mit einer korrespondierenden Gegen-Koppeleinheit eines elektrischen Verbrauchers oder eines datenverarbeitenden Geräts verbindbar ist, oder
- eine Betätigungseinheit (40) zum Betätigen eines elektrischen Verbrauchers umfasst oder
mit einem Hinterbau (Hb) einer solchen Koppeleinheit (Auf, Hb) oder einer solchen Betätigungseinheit (40) mechanisch verbunden oder verbindbar ist,
sodass der Hinterbau (Hb) und die mit dem Hinterbau (Hb) verbundene Empfangs-Einheit (3, 3.1, 3.2, 3.3) zusammen die Koppeleinheit (Auf, Hb, 40) oder die Betätigungseinheit (40) bereitstellen,
wobei die Empfangs-Einheit (3) dazu ausgestaltet ist,
- Ortungs-Signale zu erzeugen, welche mit dem Vorhandensein oder mit mindestens einer Charakteristik von Abstrahler-Funkwellen, die auf die Ortungs-Antenne (7) auftreffen, korrelieren,
insbesondere mit der Signalstärke oder Signalrichtung dieser Abstrahler-Funkwellen, und
- die erzeugten Ortungs-Signale an ein räumlich entferntes Steuergerät (15) zu übermitteln.

15. Empfangs-Einheit (3) nach Anspruch 14,
**dadurch gekennzeichnet, dass**
die Empfangs-Einheit (3, 3.1, 3.2, 3.3) eine vom Gehäuse (4, 5, 18) umgebene Platine (6) umfasst,
auf welcher die Ortungs-Antenne (7) und die optionale Kommunikations-Antenne (11) montiert sind,
wobei nach einer Montage der Empfangs-Einheit (3, 3.1, 3.2, 3.3) an einer Wand (W, W.1, W.2, ...) die Platine (6) vollständig oder wenigstens teilweise vor der Wand-Ebene (WE, WE.1, WE.2, ...) angeordnet ist.

16. Empfangs-Einheit (3) nach Anspruch 15,
**dadurch gekennzeichnet, dass**
die Empfangs-Einheit (3, 3.1, 3.2, 3.3) eine Fronteinheit (5) umfasst, welche nach einer Montage der Empfangs-Einheit (3, 3.1, 3.2, 3.3) an einer Wand (W, W.1, W.2, ...) vollständig oder wenigstens teilweise vor der Wand-Ebene (WE, WE.1, WE.2, ...) angeordnet ist, und
die Platine (6) eine Aussparung (Aus) aufweist,
wobei ein zur Wand (W, W.1, W.2, ...) zeigender Bestandteil (Auf) der Fronteinheit (5) durch die Aussparung (Aus) in der Platine (6) hindurch geführt ist und
wobei bevorzugt die Platine (6) den Bestandteil (Auf) der Fronteinheit (5) vollständig umgibt.
